(19) Europäisches Patentamt
European Patent Office
Office européen des brevets

(11) **EP 3 891 086 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **19835583.6**

(22) Anmeldetag: **06.12.2019**

(51) Internationale Patentklassifikation (IPC):
**B65G 1/04** *(2006.01)*    **B66B 5/28** *(2006.01)*

(52) Gemeinsame Patentklassifikation (CPC):
**B65G 1/06; B65G 1/0485; B65G 1/0492**

(86) Internationale Anmeldenummer:
**PCT/AT2019/060416**

(87) Internationale Veröffentlichungsnummer:
**WO 2020/113254 (11.06.2020 Gazette 2020/24)**

(54) **REGALLAGERSYSTEM MIT VERBESSERTER LADEGUT-MANIPULATIONSEINHEIT**

RACK STORAGE SYSTEM COMPRISING AN IMPROVED LOAD MANIPULATION UNIT

SYSTÈME D'EMMAGASINAGE À RAYONNAGES MUNI D'UNE UNITÉ AMÉLIORÉE DE MANIPULATION DE MARCHANDISES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2018   AT 510902018**

(43) Veröffentlichungstag der Anmeldung:
**13.10.2021   Patentblatt 2021/41**

(73) Patentinhaber: **TGW Mechanics GmbH**
**4600 Wels (AT)**

(72) Erfinder:
• **SCHAUER, Johannes**
**4076 St. Marienkirchen an der Polsenz (AT)**
• **RAUSCH, Martin**
**4810 Gmunden (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
EP-A1- 0 658 508          AT-A1- 511 140
DE-A1- 2 441 557          JP-A- H07 112 805
JP-A- 2009 121 583        JP-A- 2016 060 622
US-A1- 2012 185 080

**Beschreibung**

Die Erfindung betrifft ein Regallagersystem, umfassend ein erstes Lagerregal mit Lagerplätzen für Ladegüter, die in übereinander liegenden Lagerebenen nebeneinander angeordnet sind, und ein zweites Lagerregal mit Lagerplätzen für Ladegüter, die in übereinander liegenden Lagerebenen nebeneinander angeordnet sind. Das erste Lagerregal und das zweite Lagerregal stehen in einer horizontalen z-Richtung in einem Abstand einander gegenüber, wodurch eine Regalgasse zwischen dem ersten Lagerregal und dem zweiten Lagerregal ausgebildet wird, welche eine horizontal in einer x-Richtung verlaufende Längsachse aufweist, die rechtwinkelig zur z-Richtung ausgerichtet ist. Das erste Lagerregal umfasst (erste) vordere Regalsteher, (erste) hintere Regalsteher, je Lagerebene in der x-Richtung verlaufende und mit den (ersten) vorderen Regalstehern verbundene (erste) vordere Längstraversen, je Lagerebene in der x-Richtung verlaufende und mit den (ersten) hinteren Regalstehern verbundene (erste) hintere Längstraversen, und einen je Lagerebene zwischen der (ersten) vorderen Längstraverse und der (ersten) hinteren Längstraverse angeordneten (ersten) Regalboden mit den Lagerplätzen. Das zweite Lagerregal umfasst (zweite) vordere Regalsteher, (zweite) hintere Regalsteher, je Lagerebene in der x-Richtung verlaufende und mit den (zweiten) vorderen Regalstehern verbundene (zweite) vordere Längstraversen, je Lagerebene in der x-Richtung verlaufende und mit den (zweiten) hinteren Regalstehern verbundene (zweite) hintere Längstraversen, und einen je Lagerebene zwischen der (zweiten) vorderen Längstraverse und der (zweiten) hinteren Längstraverse angeordneten (zweiten) Regalboden mit den Lagerplätzen. Weiterhin umfasst das Regallagersystem eine Ladegut-Manipulationseinheit, welche eine in der z-Richtung seitlich zur Regalgasse versetzte erste Puffervorrichtung und eine erste Ladegut-Hebevorrichtung zum Einlagern und/oder Auslagern von Ladegütern aufweist. Die erste Ladegut-Hebevorrichtung ist im Randbereich der Regalgasse angeordnet. Die erste Puffervorrichtung weist in zumindest einigen der Lagerebenen Bereitstellvorrichtungen auf, die jeweils für das Zwischenpuffern eines Ladeguts oder mehrerer Ladegüter ausgebildet sind und in der x-Richtung benachbart an einer der Seiten der ersten Ladegut-Hebevorrichtung oder in der x-Richtung benachbart zu beiden Seiten der ersten Ladegut-Hebevorrichtung angeordnet sind. Die erste Ladegut-Hebevorrichtung umfasst einen ersten Vertikalmast mit einer ersten Hubführung, und einen ersten Hubantrieb mit einer ersten Antriebsstation sowie einem Zugmitteltrieb. Der Vertikalmast ist in einem Randbereich der Regalgasse angeordnet, ortsfest aufgestellt und am ersten Lagerregal befestigt. Darüber hinaus umfasst die erste Ladegut-Hebevorrichtung einen an der ersten Hubführung gelagerten und durch den ersten Hubantrieb vertikal bewegbaren ersten Hubrahmen, welcher mit dem Zugmitteltrieb des ersten Hubantriebs verbunden ist, und eine am ersten Hubrahmen angeordnete erste Transportvorrichtung, welche zumindest zum Transport der Ladegüter zwischen einer der Bereitstellvorrichtungen und der ersten Transportvorrichtung in der x-Richtung ausgebildet ist. Das Regallagersystem umfasst weiterhin Führungsbahnen, welche in übereinander liegenden, horizontalen Fahrebenen jeweils paarweise (insbesondere auf gleicher Höhe) an den (ersten) vorderen Längstraversen des ersten Lagerregals und an den (zweiten) vorderen Längstraversen des zweiten Lagerregals angeordnet sind, und die in x-Richtung entlang dem ersten Lagerregal, dem zweiten Lagerregal und der Bereitstellvorrichtungen verlaufen. Zudem umfasst das Regallagersystem zumindest ein automatisiertes Regalbediengerät (insbesondere ein Einebenen-Regalbediengerät) mit zumindest einer Lastaufnahmevorrichtung zum Transport der Ladegüter zwischen den Lagerplätzen und den Bereitstellvorrichtungen, das auf einer Fahrebene vor den Lagerplätzen und vor der Bereitstellvorrichtung entlang der Führungsbahnen in der x-Richtung verfahrbar ist. Schließlich umfasst das Regallagersystem eine an die Ladegut-Manipulationseinheit angeschlossene erste Fördertechnik zum Antransport von Ladegütern zur ersten Ladegut-Hebevorrichtung und/oder zum Abtransport von Ladegütern von der ersten Ladegut-Hebevorrichtung, wobei die erste Ladegut-Hebevorrichtung die erste Fördertechnik und die Bereitstellvorrichtungen fördertechnisch verbindet.

Die JP 2016-060622 A und JP 2009-121583 A offenbaren ein gattungsgemäßes Regallagersystem. JP2009-121583 wird als nächstliegender Stand der Technik betrachtet. Insbesondere umfassen die Ladegut-Hebevorrichtungen zum Einlagern und Auslagern von Ladegütern jeweils einen Vertikalmast mit einer Hubführung, einen Hubantrieb mit einer Antriebsstation und einem Zugmitteltrieb, einen an der Hubführung gelagerten und durch den Hubantrieb vertikal bewegbaren Hubrahmen, welcher mit dem Zugmitteltrieb des Hubantriebs verbunden ist, und eine am Hubrahmen angeordnete erste Transportvorrichtung zum Transport der Ladegüter. Die Antriebsstation ist auf einer der Regalgasse zugewandten Seite des Vertikalmasts angeordnet ist und umfasst einen Antriebsmotor, welcher innerhalb der Regalgasse angeordnet ist. Der Hubrahmen mit der Transportvorrichtung ist auf einer der Regalgasse abgewandten Seite des Vertikalmasts angeordnet.

Unterschiedliche Ausbildungen eines automatisierten Regallagersystems sind beispielweise auch aus der EP 2327643 B1, der EP 2 436 620 A2, der EP 2 158 144 B1, der EP 1 716 060 B1, der EP 2 132 113 B1 und der DE 10 2011 012 424 A1 bekannt.

Die bekannten Regallagersysteme weisen jedoch eine Reihe von Nachteilen auf:
Der Hubrahmen kann bei einer Lösung nach dem Stand der Technik, bei der die Antriebsmotoren unter dem Hubrahmen angeordnet sind, nicht sehr tief abgesenkt werden, wodurch die Anbindung an eine weiterführende Fördertechnik ebenfalls in relativ großem Abstand zum Boden erfolgen muss. Es sind auch Lösungen bekannt, bei denen die Antriebsmotoren in der x-Richtung benachbart zum Vertikalmast angeordnet sind. Dadurch kann zwar eine untere Anfahrhöhe (das heißt eine unterste Höhenstellung des Hubrahmens am Vertikalmast) minimiert werden, jedoch sind Antriebsmotoren von der Regalgasse aus nur sehr schwer zugänglich und schwer zu warten.

Wird ein endloses Zugmittel (etwa ein Flachriemen oder Zahnriemen) für die Vertikalbewegung des Hubrahmens eingesetzt, so wird dieses in bekannter Weise um ein Antriebsrad und ein Umlenkrad, gegebenenfalls auch über Führungsräder geführt. Um ein Herausspringen des Zugmittels vom Antriebsrad, Umlenkrad oder Führungsrad und um ein Durchrutschen des Zugmittels über das Antriebsrad oder ein Überspringen des Zugmittels über eine Verzahnung des Antriebsrads zu vermeiden, wird dieses unter eine Vorspannung gesetzt. Das endlose Zugmittel weist bei Belastung im Wesentlichen zwei Abschnitte auf, nämlich ein Lasttrum und ein Leertrum. Zusätzlich zu der Vorspannung herrscht im Lasttrum ein durch das Gewicht des Hubrahmens beeinflusster Lastspannungsanteil. Durch diesen Lastspannungsanteil wird das Lasttrum gegenüber dem unbelasteten Zustand gedehnt. Diese Dehnung wird vom Leertrum aufgenommen, das nun gegenüber dem unbelasteten Zustand verkürzt wird. Dementsprechend wird die im Leertrum herrschende Spannung unter die Vorspannung im unbelasteten Zustand reduziert. Um ein Herausspringen des Zugmittels aus einem Umlenkrad (oder - sofern vorhanden - einem Führungsrad) im Bereich des Leertrums zu verhindern, sollte die Vorspannung im Leertrum auch in diesem Lastzustand nicht auf null sinken, da dieses ansonsten schlaff wird. Ein solcher Zustand muss im Besonderen auch dann verhindert werden, wenn der Hubrahmen nach oben beschleunigt wird und das Lasttrum aufgrund des erhöhten Lastspannungsanteils noch stärker gedehnt wird.

Besonders problematisch ist die Höhenstellung des Hubrahmens in seiner untersten Position, da das Leertrum dann am kürzesten ist. Die Vorspannung im Zugmittel sollte so hoch gewählt werden, dass der Längenausgleich auch in diesem Zustand bewerkstelligt werden kann, ohne dass das Leertrum schlaff wird. Dies ist insbesondere bei Lösungen nach dem Stand der Technik schwierig, bei denen sich das Antriebsrad für das Zugmittel im Mastfußbereich (direkt unter dem oberen Umlenkrad im Mastkopfbereich) befindet, weil das Leertrum bei einer solchen Lösung generell besonders kurz ist. Nachteilig ist dabei vor allem die Reduktion des nutzbaren Lastspannungsanteils aufgrund der hohen notwendigen Vorspannung im Zugmittel. Dementsprechend sind relativ große Querschnitte für das Zugmittel nötig, um die geforderten Lasten überhaupt tragen und bewegen zu können.

In der Regel werden darüber hinaus relativ massive Profilquerschnitte für den Vertikalmast eingesetzt. Dieser ist damit schwer und teuer. Insbesondere ist auch die Montage bei Masthöhen von 30 bis 40 m aufwändig und nur mit schweren Kränen zu bewerkstelligen.

Die aus dem Stand der Technik bekannten Regallagersysteme bieten auch keine allgemein wirksamen Lösungen für den Fall, dass der Zugmitteltrieb einmal versagen sollte (weil z.B. ein Zugmittel des Zugmitteltriebs reißt). Zwar kann dem Hubrahmen eine Sicherheitsbremse zugeordnet sein, jedoch bremst diese erst nach einer Verzögerungs- oder Einfallzeit. Befindet sich der Hubrahmen beim Versagen des Zugmitteltriebs unterhalb jener Höhe, welche der Verzögerungs- oder Einfallzeit der Sicherheitsbremse entspricht, so ist die Sicherheitsbremse völlig wirkungslos. Im Fall, dass sich der Hubrahmen beim Reißen des Zugmittels gerade nach unten bewegt, tritt das Problem noch stärker zu Tage. Ein Reißen des Zugmittels zieht daher in der Regel schwere Schäden nach sich.

Bekannte Systeme sind wegen der Bauhöhe des Lagerregals von einigen Metern auch anfällig für Schwingungen, die durch den Betrieb der bewegten Komponenten (z.B. durch den Betrieb des Regalbediengeräts oder auch durch den Betrieb des Hubrahmens oder der Hubrahmen der Ladegut-Hebevorrichtung(en)) in das Regallager eingeleitet werden. Zudem werden derartige Schwingungen beziehungsweise Vibrationen durch die Tendenz zu immer höheren Bewegungsgeschwindigkeiten und Beschleunigungen, insbesondere des vertikal verfahrbaren Hubrahmens, begünstigt. Problematisch ist dabei, dass Ladegüter mit geringem Gewicht von ihrer vorgesehenen Position, in welcher sie im Lagerregal abgestellt werden, "weggerüttelt" werden können. Dies kann dazu führen, dass eine automatische Entnahme durch ein Regalbediengerät erschwert oder sogar verhindert wird und eine Störungsbehebung notwendig ist. Dies bedeutet unter anderem Stillstand, manuelles Eingreifen und damit verbundene Kosten.

Eine Aufgabe der Erfindung ist es daher ein verbessertes Regallagersystem anzugeben. Insbesondere soll eine Einlagerleistung und/oder Auslagerleistung der Ladegut-Manipulationseinheit erhöht werden. Insbesondere soll der Hubrahmen weit absenkbar sein, verhindert werden, dass das Zugmittel aus seiner Führung springt oder durchrutscht, ein Schaden beim Versagen des Zugmitteltriebs gering gehalten werden, die Montage des Vertikalmasts vereinfacht werden und/oder Vibrationen im Regallagersystem gering gehalten werden.

Die Aufgabe der Erfindung wird mit einem Regallagersystem gemäß dem Anspruch 1 und 2 gelöst.

Der erste Hubrahmen ist mit der ersten Transportvorrichtung auf einer der Regalgasse abgewandten Seite des Vertikalmasts und die erste Antriebsstation ist auf einer der Regalgasse zugewandten Seite des Vertikalmasts angeordnet. Die erste Antriebsstation umfasst einen ersten Antriebsmotor, welcher innerhalb der Regalgasse angeordnet ist. Durch die vorgeschlagenen Maßnahmen ist der Antriebsmotor von der Regalgasse aus gut zugänglich, wodurch die Montage und die Wartung desselben auf einfache Weise möglich ist. Darüber hinaus kann der Hubrahmen besonders weit in Bodennähe gefahren werden, da der Antriebsmotor außerhalb des Bewegungsbereichs des Hubrahmens angeordnet ist. Eine untere Anfahrhöhe (das heißt eine unterste Höhenstellung des Hubrahmens am Vertikalmast) beträgt insbesondere weniger als 500 mm, im Speziellen 375 mm.

Der Vertikalmast kann in der Regalgasse angeordnet sein. Der Vertikalmast kann aber auch vorteilhaft in der z-Richtung seitlich versetzt zur Regalgasse, das heißt außerhalb der Regalgasse angeordnet sein.

Der erste Zugmitteltrieb der ersten Ladegut-Hebevorrichtung umfasst ein Zugmittel, insbesondere ein endloses Zugmittel. In einer günstigen Ausführungsvariante des Regallagersystems ist das Zugmittel um ein Antriebsrad (welches mit dem Antriebsmotor gekuppelt ist), ein oberes / unteres Umlenkrad und um zumindest ein Führungsrad geführt. Das Antriebsrad, das obere und untere Umlenkrad, das Führungsrad, und gegebenenfalls ein Spannsystem für das Zugmittel sind ebenfalls Teil des Zugmitteltriebs. Die Antriebsstation umfasst das Antriebsrad und den Antriebsmotor, welche auf einer gemeinsamen Grundplatte gelagert sein können. Das Antriebsrad ist sowohl Teil der Antriebsstation als auch Teil des Zugmitteltriebs. Das untere Umlenkrad ist im Mastfußbereich gelagert, das obere Umlenkrad im Mastkopfbereich. Das Zugmittel kann insbesondere als Zahnriemen und das Antriebsrad als Zahnscheibe ausgebildet sein.

Durch die vorgeschlagenen Maßnahmen kann die Antriebskraft beziehungsweise die Antriebsleistung des Antriebsmotors bei nur geringen bewegten Massen auf den Hubrahmen übertragen werden. Auch kann der Antriebsmotor fix in Bodennähe installiert werden und trägt nicht zu der bewegten Masse des Hubrahmens bei. Insbesondere wenn der Vertikalmast mit einem offenen Profilquerschnitt oder als Hohlprofil ausgebildet ist, kann eines der Trume des Zugmittels auch im Inneren desselben geführt werden.

Durch die Positionierung des Antriebsrads in der Regalgasse wird das Leertrum darüber hinaus deutlich gegenüber einer Lösung verlängert, bei der das Antriebsrad für das Zugmittel im Mastfußbereich angeordnet ist. In etwa kann die Länge des Leertrums gegenüber diesen bekannten Lösungen verdoppelt werden. Durch die vorgeschlagenen Maßnahmen kann das Leertrum die im Lasttrum bei Belastung und/oder Beschleunigung des Hubrahmens auftretende Dehnung leichter aufnehmen. Die Vorspannung im Zugmittel kann daher niedriger gewählt werden, ohne dass ein Herausspringen des Zugmittels aus dem unteren Umlenkrad oder einer Führungsrolle (sofern im Bereich des Leertrums vorhanden) oder ein Durchrutschen des Zugmittels über das Antriebsrad beziehungsweise ein Überspringen des Zugmittels über eine Verzahnung des Antriebsrads befürchtet werden muss. Dementsprechend ist der nutzbare Lastspannungsanteil vergleichsweise hoch, und es sind nur relativ kleine Querschnitte für das Zugmittel nötig, um die geforderten Lasten tragen und bewegen zu können. Durch das Vorsehen einer Führungsrolle wird zudem der Umschlingungswinkel um das Antriebsrad vergrö-ßert, was den Hubantrieb zusätzlich verbessert.

Zur Erreichung des oben genannten Ziels ist es von Vorteil, wenn

- der Zugmitteltrieb ein Antriebsrad, ein unteres Umlenkrad, ein oberes Umlenkrad, ein Führungsrad und ein um das Antriebsrad, das untere Umlenkrad, das obere Umlenkrad und das Führungsrad geführtes Zugmittel umfasst, wobei
- das untere Umlenkrad im Bereich eines Vertikalmastfußes des Vertikalmasts (konkret im Bereich des Leertrums des Zugmittels am Vertikalmastfuß) und das obere Umlenkrad im Bereich eines Vertikalmastkopfes des Vertikalmasts angeordnet sind,
- das Führungsrad im Bereich des Vertikalmastfußes zwischen dem unteren Umlenkrad und dem Antriebsrad angeordnet ist,
- das Antriebsrad mit einem Abstand zum Vertikalmast im Bereich des Vertikalmastfu-ßes angeordnet ist, und
- ein Mittenabstand (insbesondere ein horizontaler Mittenabstand) zwischen dem Antriebsrad und dem unteren Umlenkrad mindestens 300 mm beträgt. Besonders bevorzugt beträgt der genannte Mittenabstand zwischen 350 mm und 800 mm.

Vorteilhaft, kann die erste Ladegut-Hebevorrichtung ein Spannsystem zur Montage des Zugmittels und/oder zur Einstellung einer Vorspannkraft im Zugmittel aufweisen, welches auf der der Regalgasse zugewandten Seite des Vertikalmasts angeordnet ist.

Aufgrund der vorgeschlagenen Maßnahmen ist das Spannsystem gut von der Regalgasse aus zugänglich, wodurch das Spannen des Zugmittels bei der Herstellung des Regallagersystems oder ein Nachspannen des Zugmittels bei der Wartung des Regallagersystems auf einfache Weise möglich ist. Als Spannsystem kommen zum Beispiel Spannschlösser in Frage, bei denen die Spannung des Zugmittels mit Hilfe einer Schraube beziehungsweise einer Schraubenmutter eingestellt werden kann.

Es kann auch vorgesehen werden, dass der Vertikalmast einen offenen Profilquerschnitt aufweist, wobei der Profilquerschnitt eine Profilbasis (auch unter dem Begriff "Profilsteg" bekannt), von dieser vorragende (und insbesondere parallel verlaufende) Profilschenkel und an den freien Enden der Profilschenkel abgewinkelte Montageschenkel umfasst, an denen der Vertikalmast am ersten Lagerregal befestigt ist.

Der Profilquerschnitt kann somit insbesondere C-förmig (mit nach innen gebogenen Montageschenkeln) oder U-förmig mit nach außen gerichteten, insbesondere nach außen gebogenen Montageschenkeln gestaltet sein. Durch die offene Bauweise sind die Anbauten am Vertikalmast gut zugänglich, wodurch nicht nur die Herstellung der Ladegut-Manipulationseinheit, sondern auch deren Wartung vereinfacht wird. Die Montageschenkel sind um eine Vertikalachse des Mastes nach außen oder innen gerichtet (insbesondere um eine vertikale Achse abgebogen) und bieten eine Auflagefläche für die Montage des Vertikalmasts am ersten Lagerregal. Im Speziellen wird der Vertikalmast über Verbindungsmittel mit dem Lagerregal verbunden. Als Verbindungsmittel können insbesondere Schrauben vorgesehen sein, denkbar ist aber auch eine Verbindung durch Nieten oder durch Klemmen. Durch die Befestigung des Vertikalmasts am Lagerregal, insbesondere an mehreren vertikal übereinander liegenden Montageabschnitten, ist der Vertikalmast trotz der offenen Bauweise außerordentlich stabil, insbesondere gegen Verdrehung und selbst bei Masthöhen von 30 bis 40 m. Darüber hinaus ist es von Vorteil, dass der Materialeinsatz gering ist und auch das Gewicht auf ein Minimum reduziert wird. Dadurch ist eine einfachere Montage mit geringerem technischen Aufwand möglich und auch die Transportkosten sind gering. Grundsätzlich ist aber auch denkbar, dass der Vertikalmast einen geschlossenen Profilquerschnitt aufweist und insbesondere als Rechteckrohr ausgebildet ist. Der Vertikalmast weist dann eine besonders hohe Torsionssteifigkeit auf.

Erfindungsgemäß umfasst die erste Ladegut-Hebevorrichtung

- einen ersten Zusatz-Hubantrieb mit einer ersten Zusatz-Antriebsstation und einem daran gekoppelten ersten Zusatz-Zugmitteltrieb,
- einen am ersten Vertikalmast entlang der ersten Hubführung oder entlang einer ersten Zusatz-Hubführung verschiebbar gelagerten ersten Zusatz-Hubrahmen, welcher mit Hilfe des ersten Zusatz-Hubantriebs vertikal bewegbar ist, und
- eine am ersten Zusatz-Hubrahmen angeordnete erste Zusatz-Transportvorrichtung, welche zumindest zum Transport der Ladegüter zwischen einer Bereitstellvorrichtung und der ersten Zusatz-Transportvorrichtung in der x-Richtung ausgebildet ist.

Dadurch kann die Einlagerleistung und/oder Auslagerleistung der Ladegut-Manipulationseinheit erhöht werden. Im Wesentlichen wird die Leistung verdoppelt, wenn ein zweiter Hubrahmen vorgesehen wird, und verdreifacht, wenn ein dritter Hubrahmen vorgesehen wird, usw. Durch das Führen der Hubrahmen auf demselben Vertikalmast und insbesondere an derselben Hubführung ist die Erhöhung der Einlagerleistung und/oder Auslagerleistung der Ladegut-Manipulationseinheit vorteilhaft bei gleicher Grundfläche möglich.

Generell kann ein "Regalboden" insbesondere in z-Richtung verlaufende Querträger beziehungsweise Tiefenauflagen umfassen oder als Fachboden oder als Gitterfachboden ausgebildet sein.

Unter dem Transport der Ladegüter zwischen den Lagerplätzen und den Bereitstellvorrichtungen ist insbesondere die Übernahme von Ladegütern von einer Bereitstellvorrichtung, das Einlagern von Ladegütern auf die Lagerplätze, das Auslagern von Ladegütern aus den Lagerplätzen und die Übergabe von Ladegütern auf eine der Bereitstellvorrichtungen zu verstehen.

Eine fördertechnische Verbindung zwischen der ersten Fördertechnik und den Bereitstellvorrichtungen durch die erste Ladegut-Hebevorrichtung ermöglicht insbesondere, Ladegüter von der ersten Fördertechnik auf die erste Ladegut-Hebevorrichtung zu übernehmen und auf eine Bereitstellvorrichtung abzugeben und/oder Ladegüter von einer Bereitstellvorrichtung auf die erste Ladegut-Hebevorrichtung zu übernehmen und auf die erste Fördertechnik abzugeben.

Die "Bereitstellvorrichtungen" können nach einer ersten Ausführung als passive Bereitstellvorrichtungen ausgebildet sein und jeweils einen stationären Auflagetisch (ohne Förderelemente) für das Zwischenpuffern eines oder mehrerer Ladegüter umfassen, und nach einer zweiten Ausführung als aktive Bereitstellvorrichtungen ausgebildet sein und jeweils eine Fördervorrichtung (mit zumindest einem motorisch angetriebenen Förderelement - z.B. mit zumindest einer Förderrolle) umfassen.

Je nach Ausführungsform kann die Transportvorrichtung so ausgebildet oder betrieben werden, dass die Ladegüter auf ihr nur in einer Richtung transportiert werden oder so, dass die Ladegüter auf ihr in beiden Richtungen transportiert werden können (Reversierbetrieb). Die Transportvorrichtung kann zum Beispiel durch eine Fördervorrichtung oder eine Lastaufnahmevorrichtung gebildet sein, wie dies beispielweise in der WO 2013/090970 A2 beschrieben ist.

Ein "Lagerplatz" ist generell ein Bereich im Regallagersystem, an dem ein Ladegut gelagert werden kann. Die Ladegüter können direkt auf den Lagerplätzen gelagert werden oder mit Hilfe von Ladehilfsmitteln. Die Lagerplätze sind in verschiedenen "Lagerebenen" angeordnet.

Ein "Ladehilfsmittel" dient generell der Lagerung und dem Transport von Ladegütern im Regallagersystem und kann insbesondere als Behälter, Karton, Tablar, Palette, Beutel (insbesondere als "Polybag"), Tasche, Sack oder Hängetasche ausgebildet sein. An dieser Stelle wird angemerkt, dass nicht alle Ladehilfsmittel im Regallagersystem dieselben Eigenschaften aufweisen müssen, sondern die Ladehilfsmittel auch unterschiedlich ausgebildet sein können. Die Ladehilfsmittel können zudem mehrere Aufnahmebereiche / Aufnahmefächer aufweisen.

Ein "Regalbediengerät" ist ein automatisiert betriebenes Förderfahrzeug, das auf Schienen fährt und als Einebenen-Regalbediengerät (auch "Shuttle" genannt) ausgebildet sein kann. In diesem Fall kann das Regalbediengerät über eine Lastaufnahmevorrichtung beziehungsweise ein Lastaufnahmemittel nur eine einzige Lagerebene bedienen. Ein Regalbediengerät kann aber auch als Mehrebenen-Regalbediengerät ausgeführt sein. In diesem Fall kann das Regalbediengerät über eine Lastaufnahmevorrichtung beziehungsweise ein Lastaufnahmemittel mehrere Lagerebenen bedienen. In einem Regallagersystem können in derselben Regalgasse insbesondere mehrere Regalbediengeräte (sowohl Einebenen-Regalbediengeräte als auch Mehrebenen-Regalbediengeräte) vorgesehen sein, die insbesondere in verschiedenen "Fahrebenen" operieren.

Im Regallagersystem können auch mehrere "Wartungsebenen" vorgesehen sein, die insbesondere durch Gehstege für Montage- und Wartungspersonal gebildet sein können.

Das Regallagersystem kann auch ein Steuerungssystem aufweisen, dass allgemein der Ansteuerung der bewegten Komponenten des Regallagersystems dient, beispielsweise der Ansteuerung der Regalbediengeräte und der Ladegut-Hebevorrichtung(en). Das Steuerungssystem kann auch mit einem übergeordneten Zentralrechner eines Lager- und Kommissioniersystems verbunden sein, welches das Regallagersystem umfasst.

Weitere vorteilhafte Ausgestaltungen und Weiterbildungen der Erfindung ergeben sich nun aus den Unteransprüchen sowie aus der Beschreibung in Zusammenschau mit den Figuren.

Vorteilhaft ist eine Antriebsachse des ersten Antriebsmotors in der x-Richtung ausgerichtet. Auf diese Weise kann der Antriebsmotor besonders platzsparend in der Regalgasse angeordnet werden, wodurch ein Passieren der Ladegut-Hebevorrichtung, beispielsweise durch Wartungspersonal, auf einfache Weise möglich ist. Insbesondere eignet sich diese Anordnung dann, wenn die Regalgasse relativ schmal ist und/oder wenn mehrere Ladegut-Hebevorrichtungen (insbesondere spiegelbildlich um die x-Achse) in der Regalgasse einander gegenüberliegend angeordnet sind. Darüber hinaus ist die Bauhöhe der Ladegut-Hebevorrichtungen) wegen des liegend angeordneten Antriebsmotors innerhalb der Regalgasse vergleichsweise gering. Dementsprechend können die Regalbediengeräte die Ladegut-Hebevorrichtung in nur niedriger Höhe passieren. Wird die Ladegut-Hebevorrichtung im Boden versenkt, so ist nur eine wenig tiefe Grube dafür notwendig.

Vorteilhaft ist es aber auch, wenn eine Antriebsachse des ersten Antriebsmotors vertikal ausgerichtet ist. Auch bei dieser Anordnung ist ein Passieren der Ladegut-Hebevorrichtung(en) auf einfache Weise möglich, und die Anordnung eignet sich wiederum insbesondere für relativ schmale Regalgassen und/oder den Fall, dass mehrere Ladegut-Hebevorrichtungen (insbesondere spiegelbildlich um die x-Achse) in der Regalgasse einander gegenüberliegend angeordnet sind.

Besonders vorteilhaft ist es weiterhin, wenn

- das erste Lagerregal (erste) Montagetraversen umfasst, welche zusätzlich zu den (ersten) vorderen Längstraversen an den (ersten) vorderen Regalstehern befestigt sind (zum Beispiel über Verbindungsmittel bevorzugt lösbar befestigt sind) und parallel zu den (ersten) vorderen Längstraversen verlaufen, und
- der (erste) Vertikalmast einen der Regalgasse zugewandten Montageabschnitt umfasst, mit dem die erste Ladegut-Hebevorrichtung an den (ersten) Montagetraversen gelagert ist (zum Beispiel über Verbindungsmittel bevorzugt lösbar befestigt ist).

In obigem Zusammenhang ist es auch von Vorteil, wenn das zweite Lagerregal (zweite) Montagetraversen umfasst, welche zusätzlich zu den (zweiten) vorderen Längstraversen an den (zweiten) vorderen Regalstehern befestigt sind (zum Beispiel über Verbindungsmittel bevorzugt lösbar befestigt sind) und parallel zu den (zweiten) vorderen Längstraversen verlaufen.

Wie eingangs erwähnt befinden sich die Führungsbahnen für das Regalbediengerät an den vorderen Längstraversen des ersten und zweiten Lagerregals. Der Vertikalmast der Ladegut-Hebevorrichtung ist aber nicht wie üblich mit den vorderen Längstraversen verbunden, sondern mit den gesondert vorgesehenen Montagetraversen. Dies ist insbesondere dann von Vorteil, wenn der Hubrahmen hochdynamisch am Vertikalmast verstellt wird. Der Begriff "hochdynamisch" bedeutet im gegebenen Zusammenhang insbesondere Geschwindigkeiten von > 6 m/s und Beschleunigungen von > 7 m/s$^2$. Durch die Entkopplung der Verbindungsstellen für den Vertikalmast von den vorderen Längstraversen (und damit von den Führungsschienen für das Regalbediengerät) werden die durch die dynamischen Verstellbewegungen des Hubrahmens hervorgerufenen Schwingungen nicht unmittelbar auf die vorderen Längstraversen (und damit auf die Führungsschienen für das Regalbediengerät) übertragen.

In einer bevorzugten Ausführung sind darüber hinaus die Regalböden an den vorderen Längstraversen gelagert. Durch die vorgeschlagenen Maßnahmen werden auch in diesem Fall kaum Schwingungen, welche durch die Verstellbewegungen des zumindest einen Hubrahmens verursacht werden, auf die Regalböden übertragen. Ein unerwünschtes Bewegen oder "Wandern" der auf den Lagerplätzen abgestellten Ladegüter, so wie es im Stand der Technik auftreten kann und Probleme beim Auslagern der Ladegüter verursachen kann, unterbleibt daher.

Durch die vorgeschlagenen Maßnahmen kann die Schwingungsübertragung von der Ladegut-Hebevorrichtung verringert oder sogar vermieden werden. Insbesondere kann der Vertikalmast an mehreren vertikal übereinander liegenden Montageabschnitten mit mehreren vertikal übereinander angeordneten Montagetraversen verbunden sein. Als Verbindungsmittel können insbesondere Schrauben vorgesehen sein, denkbar ist aber auch eine Verbindung durch Nieten oder durch Klemmen.

In einer günstigen Ausführungsvariante umfasst das Regallagersystem Gehstege, welche in der Regalgasse in übereinander liegenden Wartungsebenen angeordnet und an den Montagetraversen des ersten Lagerregals und an den Montagetraversen des zweiten Lagerregals befestigt sind (zum Beispiel über Verbindungsmittel bevorzugt lösbar befestigt sind). Durch diese Maßnahmen werden im Regallagersystem Montage- beziehungsweise Wartungsebenen vorgesehen, die durch Montage- beziehungsweise Wartungspersonal betreten werden können, um im Regallagersystem Montagearbeiten beziehungsweise Wartungsarbeiten durchführen zu können. Als Verbindungsmittel können wiederum Schrauben, Nieten oder Klemmen vorgesehen sein.

Vorteilhaft ist es, wenn die Verbindung zwischen dem (ersten) Vertikalmast und einer der (ersten) Montagetraversen durch ein gewinkeltes oder gekröpftes (das heißt doppelt gewinkeltes) Befestigungselement hergestellt ist. Die gewinkelte beziehungsweise gekröpfte Bauweise des Befestigungselements erlaubt einerseits eine solide und sehr einfache Montage des Vertikalmasts an der Montagetraverse, andererseits aber auch eine Reduktion der Schwingungsübertragung zwischen der Ladegut-Hebevorrichtung und den Ladegütern. Konkret kann das Befestigungselement bei dieser Ausführungsform im Wesentlichen als Biegefeder wirken. Bei der Auswahl des Materials für das Befestigungselement sollte darauf geachtet werden, dass das Material über ausreichende Dämpfungseigenschaften verfügt, um unerwünschte Resonanzerscheinungen zu unterbinden.

Generell ist anzumerken, dass die Wirkung als Biegefeder nicht an eine gebogene oder gekröpfte Bauweise des Befestigungselements gebunden ist. Vielmehr ist eine freie Biegelänge zwischen dem Anbindungspunkt des Vertikalmasts an das Befestigungselement und dem Anbindungspunkt der Montagetraverse an das Befestigungselement maßgeblich.

Insbesondere ist es von Vorteil, wenn das gewinkelte oder gekröpfte Befestigungselement und/oder eine zwischen dem (ersten) Vertikalmast und einer der (ersten) Montagetraversen angeordnete Futterplatte aus einem Material mit einem Elastizitätsmodul von weniger als 40.000 MPa gefertigt ist. Durch den geringen Elastizitätsmodul wird eine Schwingungsübertragung zwischen der Ladegut-Hebevorrichtung und den Regalbediengeräten wirksam vermieden oder zumindest verringert. Im Besonderen gilt dies für ein gewinkeltes beziehungsweise gekröpftes Befestigungselement, welches eine besonders hohe Schwingungsdämpfung ermöglicht. Grundsätzlich ist es jedoch auch von Vorteil, wenn Futterplatten, die in verschiedener Stärke zur lotrechten Ausrichtung des Vertikalmasts beziehungsweise zum Abstandsausgleich zwischen dem Vertikalmast und den Montagetraversen eingefügt werden, aus einem entsprechendem Material hergestellt sind. Als Material eignen sich insbesondere Kunststoffe, wie zum Beispiel Teflon oder faserverstärkter Kunststoff. Denkbar ist aber auch der Einsatz von Gummi oder Holz (insbesondere Sperrholz), das ebenfalls über ausgezeichnete Dämpfungseigenschaften verfügt. Selbstverständlich ist auch der Einsatz von anderen Verbundmaterialien als faserverstärktem Kunststoff denkbar, beispielsweise Kunststoff-Holz-Compound-Materialien. Auch wenn die Futterplatte vorzugsweise aus einem Material mit einem Elastizitätsmodul von weniger als 40.000 MPa gefertigt wird, ist es grundsätzlich denkbar, dass die Futterplatte aus einem Metall (insbesondere aus Stahl) gefertigt ist. In diesem Fall kann die Futterplatte als "Futterblech" bezeichnet werden. An dieser Stelle wird auch angemerkt, dass zwischen dem Vertikalmast und den Montagetraversen eine Futterplatte (ein Futterblech) eingefügt werden kann oder mehrere Futterplatten (mehrere Futterbleche) eingefügt werden können.

Vorteilhaft weist der Vertikalmast eine Vielzahl von Mastsegmenten auf, die im Wesentlichen spaltfrei vertikal übereinander zusammengefügt sind (bevorzugt mit Hilfe einer Anschlagverbindung). Besonders vorteilhaft ist es in diesem Zusammenhang, wenn die erste Hubführung zur Führung des ersten (und zweiten) Hubrahmens in vertikaler Richtung durch formkomplementäre Stoßverbindungen unterteilt ist (zum Beispiel mit Hilfe einer Nut-Feder-Verbindung zwischen den einzelnen Hubführungssegmenten). Durch die vorgeschlagenen Maßnahmen wird einerseits der Transport des Vertikalmasts und dessen Einbringung in das Gebäude am Aufstellort erleichtert, andererseits ermöglicht dessen Teilung einen modularen Aufbau der Ladegut-Hebevorrichtung. Konkret können je nach geforderter Hubhöhe verschieden viele Mastsegmente zu einem Vertikalmast verbaut werden. Die Mastsegmente werden bevorzugt miteinander verschraubt.

Vorteilhaft ist es weiterhin, wenn eine Teilung zwischen den Mastsegmenten in vertikaler Richtung versetzt zu den Stoßverbindungen der Hubführung angeordnet ist. Die Stoßverbindung der Hubführung ist also nicht auf gleicher Höhe wie eine Teilung zwischen zwei Mastsegmenten angeordnet. Eine (unerwünschte) Verlagerung von Mastsegmenten zueinander, wie sie beispielsweise durch Verspannungen der Mastsegmente zueinander auftreten kann, wirkt sich nicht oder nur in geringem Maß auf die Stoßverbindungen der Hubführungen aus. Dadurch kann das Auftreten von Vibrationen beziehungsweise Schwingungen beim Bewegen des Hubrahmens gering gehalten werden. Weiterhin wird eine Biegebelastung, die vom Hubschlitten in die Hubführungen am Mast eingeleitet wird, über den Stoß der Mastelemente hinweg geleitet.

In einer weiteren günstigen Ausführungsvariante des Regallagersystems umfasst die erste Hubführung zur Führung des ersten Hubrahmens eine erste Führungsleiste und eine zweite Führungsleiste, welche voneinander getrennt und parallel in Längsrichtung des Vertikalmasts verlaufen und über Befestigungsmittel bevorzugt lösbar mit dem Vertikalmast verbunden sind. Insbesondere sind die erste Führungsleiste und die zweite Führungsleiste aus blank gezogenem oder geschliffenem Flachstahl gebildet, der Gewindebohrungen zur Befestigung desselben auf dem Vertikalmast aufweist. Trotz kostengünstiger und modularer Bauweise läuft der Hubrahmen an der ersten Hubführung ruhig, und es werden nur geringe Vibrationen in den Vertikalmast eingeleitet.

Günstig ist es außerdem, wenn der Vertikalmast und die erste Hubführung sowie die vorderen Regalsteher und hinteren Regalsteher des ersten Lagerregals aus demselben Material hergestellt sind, insbesondere aus Stahl. Durch die vorgeschlagenen Maßnahmen können insbesondere temperaturbedingte Verspannungen und/oder Spiel zwischen den Bauteilen des Regallagersystems vermieden werden. Diese Ausführungsvariante eignet sich daher insbesondere für Regallagersysteme, die in einem breiten Temperaturbereich eingesetzt werden sollen oder Temperaturschwankungen ausgesetzt sind. Beispielsweise betrifft dies Regallagersysteme, die bei Raumtemperatur errichtet werden, die aber dann bei sehr tiefen Temperaturen betrieben werden, so wie dies beispielsweise bei Tiefkühllagern der Fall ist. Generell beträgt der Temperaturbereich, in dem Regallagersysteme eingesetzt werden rund -40° C bis +40° C. Durch Vermeiden von Spiel zwischen den Bauteilen kann insbesondere die Geräuschentwicklung beim Betrieb der Ladegut-Hebevorrichtung und der Regalbediengeräte verringert werden.

Von Vorteil ist es im obigen Zusammenhang auch, wenn zusätzlich die vorderen Längstraversen sowie die hinteren Längstraversen und/oder die Montagetraversen aus dem gleichen Material hergestellt sind wie der Vertikalmast, die erste Hubführung und die vorderen und hinteren Regalsteher. Dadurch können temperaturbedingte Verspannungen und/oder Spiel zwischen den Bauteilen des Regallagersystems noch besser vermieden werden.

Es erweist sich auch von Vorteil, wenn die Ladegut-Manipulationseinheit eine energieabsorbierende Deformationsvorrichtung umfasst. Die Deformationsvorrichtung ist unterhalb des ersten Hubrahmens fix montiert, insbesondere auf einer der Regalgasse abgewandten Seite des Vertikalmasts (zum Beispiel auf einem fix stehenden Bauteil der Ladegut-Manipulationseinheit oder direkt auf einem Fußboden, dem Stahlbau des Regallagersystems oder einer Zwischendecke des Gebäudes, in welchem das Regallagersystem aufgestellt ist).

Auf diese Weise werden Schäden an der Ladegut-Manipulationseinheit gering gehalten, wenn der Zugmitteltrieb versagen sollte (weil z.B. ein Zugmittel des Zugmitteltriebs reißt) und dem Hubrahmen nicht eine Sicherheitsbremse zugeordnet ist oder eine Sicherheitsbremse für den Hubrahmen nicht schnell genug reagieren sollte. Eine Sicherheitsbremse kann zum Beispiel eine Verzögerungs- oder Einfallzeit von 0,2 bis 0,6 sek aufweisen, was gemäß der Formel:

$$h = \frac{g \cdot t^2}{2}$$

einer Fallhöhe von 0,20 bis 1,80 m entspricht. Befindet sich der Hubrahmen beim Versagen des Zugmitteltriebs unterhalb jener Höhe, welche der Verzögerungs- oder Einfallzeit der Sicherheitsbremse entspricht, so ist die Sicherheitsbremse völlig wirkungslos. Im Fall, dass sich der Hubrahmen beim Reißen des Zugmittels gerade mit seiner maximalen Geschwindigkeit nach unten bewegt, tritt das Problem noch stärker zu Tage. Die oben angegebene Verzögerungszeit entspricht bei einer Fahrgeschwindigkeit von 6 m/s einer zusätzlichen Höhe von 1,20 m beziehungsweise 3,60 m. In diesem Fall ist die Sicherheitsbremse unterhalb einer Höhe von 1,40 m beziehungsweise unterhalb einer Höhe von 5,40 m völlig wirkungslos. Mit Hilfe der Deformationsvorrichtung kann der Aufprall des Hubrahmens dennoch gedämpft werden. Vorteilhaft weist eine Deformationsvorrichtung in der Regel eine niedrigere Bauhöhe auf als zum Beispiel Hydraulikdämpfer. Der Hubrahmen kann daher im Normalbetrieb weiter nach unten bewegt werden als dies beispielsweise beim Einsatz von Hydraulikdämpfern der Fall wäre.

Vorteilhaft ist es darüber hinaus, wenn die energieabsorbierende Deformationsvorrichtung

- eine Kraftverteilplatte mit einer Aufprallfläche für den ersten Hubrahmen umfasst,
- unterhalb der Kraftverteilplatte einen durch Krafteinwirkung plastisch deformierbaren Wabenkörper umfasst, welcher eine bei Kollision des ersten Hubrahmens mit der Kraftverteilplatte entstehende Aufprallenergie zumindest zum Teil absorbiert, und
- unterhalb des Wabenkörpers eine Montageplatte zur Montage der Deformationsvorrichtung umfasst.

Der Hubrahmen weist in vertikaler Projektion nur eine geringe Fläche auf, beziehungsweise ist die Kontaktfläche zwischen dem Hubrahmen und der Deformationsvorrichtung nur gering. Durch die Kraftverteilplatte werden die beim Aufschlagen des Hubrahmens auftretenden Kräfte dennoch gleichmäßig in den Wabenkörper eingeleitet und der Wabenkörper wird gleichmäßig verformt. Grundsätzlich wäre es auch möglich, eine Kraftverteilplatte auf dem Hubrahmen anzuordnen. Um die bewegte Masse des Hubrahmens gering zu halten, ist es jedoch von Vorteil, die Kraftverteilplatte fix am Wabenkörper zu montieren. Bevorzugt ist die Kraftverteilplatte mit dem Wabenkörper verbunden, insbesondere verklebt. Bevorzugt ist auch die Montageplatte mit dem Wabenkörper verbunden, insbesondere verklebt.

Günstig ist es, wenn Hohlräume des Wabenkörpers in vertikaler Richtung verlaufen. Durch die Wabenstruktur ergibt sich ein günstiges Steifigkeits- zu Volumenverhältnis beziehungsweise ein günstiges Steifigkeits- zu Gewichtsverhältnis. Das heißt, der Verformungskörper ist trotz hoher Energieaufnahme bei der Verformung klein beziehungsweise leicht. Dadurch kann ein Verformungskörper mit nur geringer Bauhöhe bereitgestellt werden, welcher das Bewegen des Hubrahmens bis knapp über Bodenhöhe ermöglicht. Generell können in etwa 75% der Bauhöhe des Wabenkörpers für die Dämpfung des Aufpralls ausgenutzt werden. Zudem kann das Stauchverhalten des Verformungskörpers durch die Wabenstruktur gut beeinflusst werden. Schließlich ergeben sich auch günstige Herstell- beziehungsweise Austauschkosten.

Vorteilhaft ist die Biegesteifigkeit der Kraftverteilplatte um eine horizontale Achse zumindest zweimal so groß ist wie die Drucksteifigkeit des Wabenkörpers in vertikaler Richtung. Günstig ist es auch, wenn ein Unterschied der vertikalen Verformung des Verformungskörpers maximal 10% der Bauhöhe des unverformten Verformungskörpers beträgt, wenn die maximale Verformung 75% der Bauhöhe des unverformten Verformungskörpers beträgt. Mit anderen Worten beträgt die geringste Verformung dann 65% der Bauhöhe des unverformten Verformungskörpers.

Diese Maßnahmen tragen ebenfalls dazu bei, dass die beim Aufschlagen des Hubrahmens auf die Deformationsvorrichtung auftretenden Kräfte gleichmäßig in den Wabenkörper eingeleitet werden. Mit anderen Worten, sollte der Wabenkörper nachgeben (kollabieren) und sich deformieren bevor sich die Kraftverteilplatte verformt. Der Faktor zwei ist als vorteilhafter Richtwert zu verstehen. Grundsätzlich sind auch andere Werte denkbar, da die Art der Krafteinleitung in den Wabenkörper über die Kontaktfläche stark von der Bauweise des Hubrahmens, der Kraftverteilplatte und des Wabenkörpers abhängt.

Vorteilhaft ist es zudem, wenn der erste Hubantrieb und der erste Vertikalmast auf einer gemeinsamen Grundplatte angeordnet sind. Insbesondere kann die Grundplatte Mittel zum Ausrichten der darauf angeordneten Bauteile zueinander ermöglichen. Diese Mittel können beispielsweise durch Ausnehmungen (zum Beispiel Bohrungen), Vertiefungen und/oder Erhöhungen gebildet sein. Dadurch werden der erste Hubantrieb und der erste Vertikalmast bei der Montage der Ladegut-Hebevorrichtung "automatisch" zueinander ausgerichtet. Aufwändige Maßnahmen zur Ausrichtung der beiden Bauteile zueinander können daher unterbleiben.

Besonders vorteilhaft ist es, wenn die Grundplatte in einem ersten Schritt auf einer Aufstellfläche ausgerichtet (nivelliert) und montiert wird, ehe der Vertikalmast in einem zweiten Schritt von oben auf die Grundplatte aufgesetzt und an dieser befestigt wird. Als Aufstellfläche kann zum Beispiel der Fußboden oder eine Zwischendecke des Gebäudes dienen, in dem das Regallagersystem errichtet wird. Der Vertikalmast wird also auf eine fixe und horizontal ausgerichtete Montagefläche aufgesetzt, womit auch bereits eine lotrechte Ausrichtung des Vertikalmasts gegeben ist. Dies vereinfacht die Montage der Ladegut-Hebevorrichtung. Der Zugmitteltrieb wird bevorzugt nach dem Befestigen des Vertikalmasts an der Grundplatte und/oder nach dem Befestigen des Vertikalmasts am Lageregal (insbesondere an dessen Montagtraversen) montiert. In Folge kann das Zugmittel um ein Antriebsrad, ein oberes / unteres Umlenkrad und um zumindest ein Führungsrad geführt werden. Das obere Umlenkrad ist im Mastkopfbereich gelagert. Das untere Umlenkrad ist im Mastfußbereich gelagert. Über ein Spannsystem können die Enden des Zugmittels miteinander verbunden und eine Spannkraft (Vorspannung) im Zugmittel eingestellt werden.

In einer weiteren günstigen Ausführungsvariante des Regallagersystems sind der erste Hubantrieb und die energieabsorbierende Deformationsvorrichtung auf einer gemeinsamen Grundplatte angeordnet. Insbesondere kann die Grundplatte wiederum Mittel zum Ausrichten der darauf angeordneten Bauteile zueinander ermöglichen, welche beispielsweise durch Ausnehmungen (zum Beispiel Bohrungen), Vertiefungen und/oder Erhöhungen gebildet sein können. Aufwändige Maßnahmen zur Ausrichtung der Bauteile zueinander können daher wiederum unterbleiben.

Vorteilhaft ist es auch, wenn die Antriebsstation des ersten Hubantriebs und die Zusatz-Antriebsstation des ersten Zusatz-Hubantriebs auf einer gemeinsamen Grundplatte angeordnet sind. Durch die vorgeschlagenen Maßnahmen ist ein modularer Aufbau der Ladegut-Manipulationseinheit möglich. Je nach geforderter Einlagerleistung und/oder Auslagerleistung der Ladegut-Manipulationseinheit wird ein Antriebsmotor auf der Grundplatte angeordnet, oder es werden mehrere Antriebsmotoren auf der gemeinsamen Grundplatte angeordnet. Die Grundplatte kann wiederum Mittel zum Ausrichten der darauf angeordneten Bauteile zueinander ermöglichen. Diese Mittel können beispielsweise durch Ausnehmungen (zum Beispiel Bohrungen), Vertiefungen und/oder Erhöhungen gebildet sein. Aufwändige Maßnahmen zur Ausrichtung der beiden Bauteile zueinander können daher wiederum unterbleiben.

Günstig ist es weiterhin, wenn

- am ersten (und zweiten) Hubrahmen ein Beschleunigungssensor zur Detektion von zumindest einer Beschleunigung in vertikaler Richtung angeordnet ist und/oder
- die erste Ladegut-Hebevorrichtung einen optischen Entfernungs-Messsensor zur Detektion der Vertikalposition des ersten (und zweiten) Hubrahmens und/oder Mittel zur optischen Datenübertragung zum oder vom ersten (und zweiten) Hubrahmen umfasst.

Mithilfe eines Beschleunigungssensors kann insbesondere eine übermäßige vertikale Beschleunigung, wie sie beim unerwünschten Herunterfallen des Hubrahmens auftritt, erkannt werden. In Folge können Gegenmaßnahmen eingeleitet werden, wie zum Beispiel das Aktivieren einer Fallbremse. Insbesondere wenn mehrere Hubrahmen auf einem Vertikalmast geführt sind, kann jener Hubrahmen der unter dem fallenden Hubrahmen angeordnet ist, zum Bremsen des fallenden Hubrahmens eingesetzt werden. Dabei wird die Geschwindigkeit des unteren Hubrahmens nach Möglichkeit der Geschwindigkeit des fallenden Hubrahmens angeglichen, und in einem weiteren Schritt wird der untere Hubrahmen nach dem Kontakt mit dem fallenden Hubrahmen verzögert, um den fallenden Hubrahmen abzubremsen.

Denkbar ist auch, dass der untere Hubrahmen einfach in seine untere Ruheposition gefahren wird, damit das damit verbundene Zugmittel beim Aufschlagen des fallenden Hubrahmens nicht beschädigt wird. Denkbar ist weiterhin, dass der Beschleunigungssensor zur Detektion unerwünschter beziehungsweise unerwarteter Vibrationen und Schwingungen eingesetzt wird, so wie sie beispielsweise bei einem Defekt der Ladegut-Hebevorrichtung (etwa einem kaputten Lager an einer Führungsrolle des Hubrahmens) auftreten können.

Grundsätzlich ist die Detektion einer übermäßigen Vertikalbeschleunigung nicht an die Verwendung eines Beschleunigungssensors gebunden, sondern es kann für diesen Zweck natürlich auch ein optischer Entfernungs-Messsensor eingesetzt werden, nämlich indem das zeitliche Differenzial seines Positionssignals gebildet wird.

Die Datenübertragung zum oder vom ersten Hubrahmen kann insbesondere mithilfe der optischen Datenübertragung erfolgen. Diese Technik ist auch unter dem Begriff "Datenlichtschranke" bekannt. Denkbar ist insbesondere auch die Kombination beziehungsweise Integration eines optischen Entfernung-Messsensors und der optischen Datenübertragung ein einziges Gerät. Der Aufbau der Ladegut-Hebevorrichtung ist dann daher besonders kompakt.

Von Vorteil ist es auch, wenn

- die Ladegut-Manipulationseinheit eine zweite Puffervorrichtung aufweist, die wie die erste Puffervorrichtung ausgebildet ist, und eine zweite Ladegut-Hebevorrichtung aufweist, die wie die erste Ladegut-Hebevorrichtung ausgebildet ist, wobei insbesondere ein zweiter Vertikalmast der zweiten Ladegut-Hebevorrichtung am zweiten Lagerregal befestigt ist, und
- das Regallagersystem eine an die Ladegut-Manipulationseinheit angeschlossene zweite Fördertechnik zum Antransport von Ladegütern zur zweiten Ladegut-Hebevorrichtung

und/oder zum Abtransport von Ladegütern von der zweiten Ladegut-Hebevorrichtung aufweist.

Die zweite Ladegut-Hebevorrichtung kann demgemäß insbesondere folgende Merkmale aufweisen (einzeln oder in beliebiger Kombination):

- eine Antriebsachse eines Antriebsmotors der zweiten Antriebsstation ist in der x-Richtung ausgerichtet,
- eine Antriebsachse eines Antriebsmotors der zweiten Antriebsstation ist vertikal ausgerichtet,
- der zweite Vertikalmast weist einen offenen Profilquerschnitt auf, wobei der Profilquerschnitt eine Profilbasis, von dieser vorragende (und parallel verlaufende) Profilschenkel und an den freien Enden der Profilschenkel abgewinkelte Montageschenkel umfasst, an denen der Vertikalmast am zweiten Lagerregal befestigt ist,
- die Verbindung zwischen dem zweiten Vertikalmast und einer der zweiten Montagetraversen ist durch ein gewinkeltes oder gekröpftes (das heißt doppelt gewinkeltes) Befestigungselement hergestellt,
- das gewinkelte oder gekröpfte Befestigungselement und/oder eine zwischen dem zweiten Vertikalmast und einer der zweiten Montagetraversen angeordnete Futterplatte ist aus einem Material mit einem Elastizitätsmodul von weniger als 40.000 MPa gefertigt,
- der zweite Vertikalmast weist eine Vielzahl von Mastsegmenten auf, die im Wesentlichen spaltfrei vertikal übereinander zusammengefügt sind (bevorzugt mit Hilfe einer Anschlagverbindung),
- die Hubführung zur Führung eines Hubrahmens ist in vertikaler Richtung durch formkomplementäre Stoßverbindungen unterteilt (zum Beispiel mit Hilfe einer Nut-Feder-Verbindung zwischen den einzelnen Hubführungssegmenten),
- eine Teilung zwischen den Mastsegmenten ist in vertikaler Richtung versetzt zu den Stoßverbindungen der Hubführung angeordnet,
- die Hubführung zur Führung eines Hubrahmens umfasst eine erste Führungsleiste und eine zweite Führungsleiste, welche voneinander getrennt und parallel in Längsrichtung des zweiten Vertikalmasts verlaufen und über Befestigungsmittel bevorzugt lösbar mit dem zweiten Vertikalmast verbunden sind,
- der zweite Vertikalmast und die zweite Hubführung sowie die vorderen Regalsteher und hinteren Regalsteher des zweiten Lagerregals sind aus demselben Material hergestellt, insbesondere aus Stahl. Optional sind auch die vorderen Längstraversen sowie die hinteren Längstraversen und/oder die Montagetraversen des zweiten Lagerregals aus dem gleichen Material hergestellt,
- die zweite Ladegut-Hebevorrichtung umfasst einen zweiten Zusatz-Hubantrieb mit einer zweiten Zusatz-Antriebsstation und einem daran gekoppelten zweiten Zusatz-Zugmitteltrieb, einen am zweiten Vertikalmast entlang der zweiten Hubführung oder entlang einer zweiten Zusatz-Hubführung verschiebbar gelagerten Zusatz-Hubrahmen, welcher mit Hilfe des zweiten Zusatz-Hubantriebs vertikal bewegbar ist, und eine am Zusatz-Hubrahmen angeordnete zweite Zusatz-Transportvorrichtung, welche zumindest zum Transport der Ladegüter zwischen einer Bereitstellvorrichtung und der zweiten Zusatz-Transportvorrichtung in der x-Richtung ausgebildet ist,
- am Hubrahmen ist ein Beschleunigungssensor zur Detektion von zumindest einer Beschleunigung in vertikaler Richtung angeordnet und/oder die zweite Ladegut-Hebevorrichtung umfasst einen optischen Entfernungs-Messsensor zur Detektion der Vertikalposition des Hubrahmens und/oder Mittel zur optischen Datenübertragung zum oder vom Hubrahmen,

- der zweite Zugmitteltrieb der zweiten Ladegut-Hebevorrichtung umfasst ein Zugmittel (insbesondere ein endloses Zugmittel) und die zweite Ladegut-Hebevorrichtung weist ein Spannsystem zur Montage des Zugmittels und/oder zur Einstellung einer Vorspannkraft im Zugmittel auf, welches auf der der Regalgasse zugewandten Seite des zweiten Vertikalmasts angeordnet ist.

Die Ladegut-Manipulationseinheit kann zudem eine (zweite) energieabsorbierende Deformationsvorrichtung umfassen, welche unterhalb des zweiten Hubrahmens fix montiert ist, insbesondere auf einer der Regalgasse abgewandten Seite des zweiten Vertikalmasts (zum Beispiel auf einem fix stehenden Bauteil der Ladegut-Manipulationseinheit oder direkt auf einem Fußboden des Regallagersystems). Die zweite energieabsorbierende Deformationsvorrichtung kann eine (zweite) Kraftverteilplatte mit einer Aufprallfläche für den zweiten Hubrahmen umfassen, unterhalb der (zweiten) Kraftverteilplatte einen durch Krafteinwirkung plastisch deformierbaren (zweiten) Wabenkörper umfassen, welcher eine bei Kollision des zweiten Hubrahmens mit der (zweiten) Kraftverteilplatte entstehende Aufprallenergie zumindest zum Teil absorbiert, und unterhalb des (zweiten) Wabenkörpers eine (zweite) Montageplatte zur Montage der Deformationsvorrichtung umfassen. Die Hohlräume des (zweiten) Wabenkörpers können insbesondere in vertikaler Richtung verlaufen.

Denkbar ist weiterhin, dass der zweite Hubantrieb und der zweite Vertikalmast auf einer gemeinsamen Grundplatte angeordnet sind, gegebenenfalls gemeinsam mit dem ersten Hubantrieb und dem ersten Vertikalmast.

Möglich ist auch, dass der zweite Hubantrieb und die zweite energieabsorbierende Deformationsvorrichtung auf einer gemeinsamen Grundplatte angeordnet sind, gegebenenfalls gemeinsam mit dem ersten Hubantrieb und der ersten energieabsorbierenden Deformationsvorrichtung.

Vorstellbar ist zudem, dass die Antriebsstation des zweiten Hubantriebs und die Zusatz-Antriebsstation des zweiten Zusatz-Hubantriebs auf einer gemeinsamen Grundplatte angeordnet sind, gegebenenfalls gemeinsam mit der Antriebsstation des ersten Hubantriebs und der Zusatz-Antriebsstation des ersten Zusatz-Hubantriebs.

Zum besseren Verständnis der Erfindung wird diese anhand der nachfolgenden Figuren näher erläutert.

Es zeigen jeweils in stark vereinfachter, schematischer Darstellung:

Fig. 1    ein Regallagersystem mit einem Teilabschnitt von Lagerregalen und einer Ladegut-Manipulationseinheit in Schrägansicht;

Fig. 2    eine Ladegut-Hebevorrichtung und eine (optionale) Deformationsvorrichtung der Ladegut-Manipulationseinheit aus Fig. 1 in Schrägansicht;

Fig. 3    eine Draufsicht auf das Regallagersystem nach Fig. 1 mit einem detaillierter dargestellten Teilabschnitt der Lagerregale und entfernten Gehstegen sowie schematisch angedeuteten Fördertechniken;

Fig. 4    eine Detailansicht auf eine Ladegut-Hebevorrichtung der Ladegut-Manipulationseinheit nach Fig. 1, von schräg hinten;

Fig. 5    wie Fig. 4, jedoch von schräg vorne;

Fig. 6    einen Horizontalschnitt durch den Vertikalmast einer Ladegut-Hebevorrichtung;

Fig. 7    eine Detailansicht des Regallagersystems im Bereich der Anbindung des Vertikalmasts an eine Montagetraverse in Schrägansicht;

Fig. 8    eine Ausschnittsvergrößerung aus Fig. 7 in Draufsicht;

Fig. 9    eine Detailansicht auf einen vorderen Regalsteher, eine vordere Längstraverse, eine Montagetraverse eines Lagerregals, einen Gehsteg und ein Regalbediengerät des Regallagersystems nach Fig. 1;

Fig. 10    einen Vertikalmast einer Ladegut-Hebevorrichtung in Schrägansicht;

Fig. 11    eine Detailansicht des Vertikalmasts aus Fig. 10;

Fig. 12    eine Detailansicht der im Regallagersystem nach Fig. 1 eingesetzten Antriebsstation in Schrägansicht;

Fig. 13    eine Detailansicht des im Regallagersystem nach Fig. 1 eingesetzten Spannsystems für das Zugmittel und

Fig. 14    eine schematisierte Seitenansicht der Ladegut-Hebevorrichtung mit Blick auf die Führung des Zugmittels.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

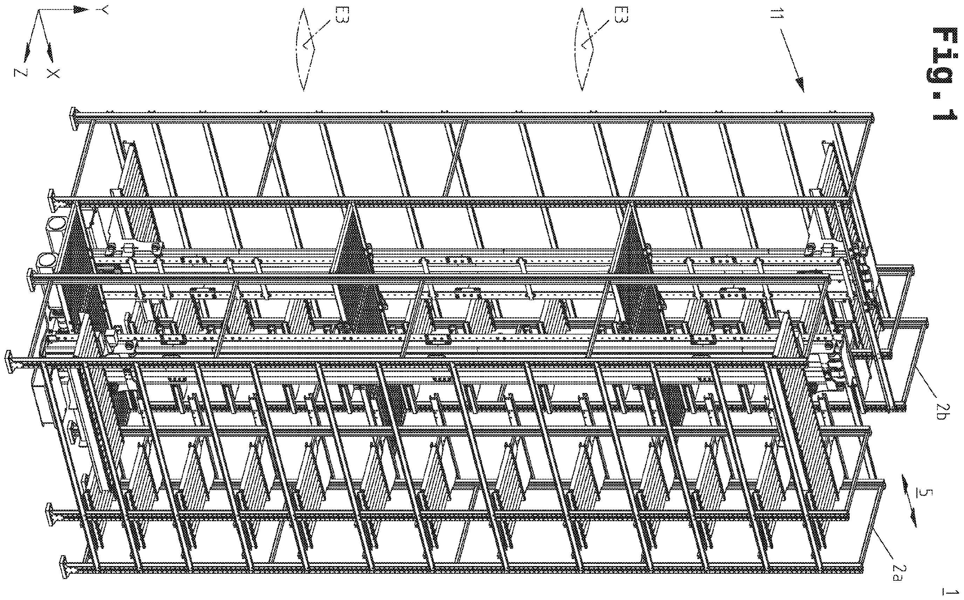

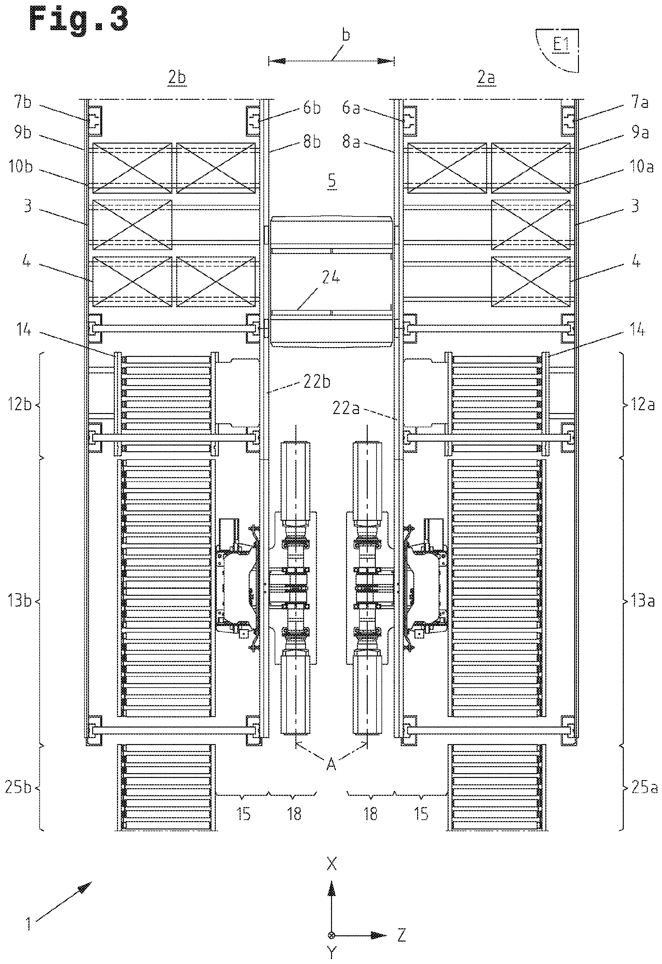

Die Figuren 1 und 3 zeigen ein beispielhaftes Regallagersystem 1. Das Regallagersystem 1 umfasst nach gezeigter Ausführung ein erstes Lagerregal 2a mit Lagerplätzen 3 für Ladegüter 4, die in übereinander liegenden Lagerebenen E1 nebeneinander angeordnet sind, sowie ein zweites Lagerregal 2b mit Lagerplätzen 3 für Ladegüter 4, die in übereinander liegenden Lagerebenen E1 nebeneinander angeordnet sind.

Das erste Lagerregal 2a und das zweite Lagerregal 2b stehen in einer horizontalen z-Richtung z in einem Abstand b einander gegenüber, wodurch eine Regalgasse 5 zwischen dem ersten Lagerregal 2a und dem zweiten Lagerregal 2b ausgebildet wird, welche eine horizontal in einer x-Richtung x verlaufende Längsachse aufweist, die rechtwinkelig zur z-Richtung z ausgerichtet ist.

Das erste Lagerregal 2a weist vordere Regalsteher 6a und hintere Regalsteher 7a auf, sowie je Lagerebene E1 (wie beispielweise in Fig. 3 eingetragen) in der x-Richtung x verlaufende und mit den vorderen Regalstehern 6a verbundene vordere Längstraversen 8a und je Lagerebene E1 in der x-Richtung x verlaufende und mit den hinteren Regalstehern 7a verbundene hintere Längstraversen 9a. Je Lagerebene E1 sind zwischen der vorderen Längstraverse 8a und der hinteren Längstraverse 9a Regalböden 10a mit den Lagerplätzen 3 angeordnet.

Das zweite Lagerregal 2b weist vordere Regalsteher 6b und hintere Regalsteher 7b auf, sowie je Lagerebene E1 (wie beispielweise in Fig. 3 eingetragen) in der x-Richtung x verlaufende und mit den vorderen Regalstehern 7b verbundene vordere Längstraversen 8b und je Lagerebene E1 in der x-Richtung x verlaufende und mit den hinteren Regalstehern 7b verbundene hintere Längstraversen 9b. Je Lagerebene E1 sind zwischen der vorderen Längstraverse 8b und der hinteren Längstraverse 9b angeordneten Regalböden 10b mit den Lagerplätzen 3 angeordnet.

Die Regalböden 10a, 10b können insbesondere in z-Richtung z verlaufende Querträger beziehungsweise Tiefenauflagen umfassen oder als Fachboden oder als Gitterfachboden ausgebildet sein.

Darüber hinaus umfasst das Regallagersystem 1 eine Ladegut-Manipulationseinheit 11.

Nach gezeigter Ausführung umfasst die Ladegut-Manipulationseinheit 11 eine in der (positiven) z-Richtung z seitlich zur Regalgasse 5 versetzte erste Puffervorrichtung 12a (siehe Fig. 1 und 3), eine erste Ladegut-Hebevorrichtung 13a zum Einlagern und/oder Auslagern von Ladegütern 4 (siehe Fig. 1 bis 3), eine in der (negativen) z-Richtung z seitlich zur Regalgasse 5 versetzte zweite Puffervorrichtung 12b (siehe Fig. 1 und 3), eine zweite Ladegut-Hebevorrichtung 13b zum Einlagern und/oder Auslagern von Ladegütern 4 (siehe Fig. 1 bis 3). Die erste Ladegut-Hebevorrichtung 13a ist insbesondere im Randbereich der Regalgasse 5 angeordnet. Die zweite Ladegut-Hebevorrichtung 13b ist ebenfalls insbesondere im Randbereich der Regalgasse 5 angeordnet. Die erste / zweite Ladegut-Hebevorrichtungen 13a, 13b sind nach gezeigter Ausführung spiegelbildlich um die x-Achse einander gegenüberliegend angeordnet.

Auch wenn dies nicht zwingend ist, kann es sich von Vorteil erweisen, wenn die erste Ladegut-Hebevorrichtung 13a ausschließlich zum Einlagern von Ladegütern 4 und die zweite Ladegut-Hebevorrichtung 13b ausschließlich zum Auslagern von Ladegütern 4 dienen oder umgekehrt.

Die erste Puffervorrichtung 12a selbst umfasst in zumindest einigen der Lagerebenen E1 Bereitstellvorrichtungen 14, die jeweils für das Zwischenpuffern eines Ladeguts 4 oder mehrerer Ladegüter 4 ausgebildet sind und in der x-Richtung x benachbart an einer der Seiten der ersten Ladegut-Hebevorrichtung 13a. Optional können in allen Lagerebenen E1 Bereitstellvorrichtungen 14a vorgesehen werden.

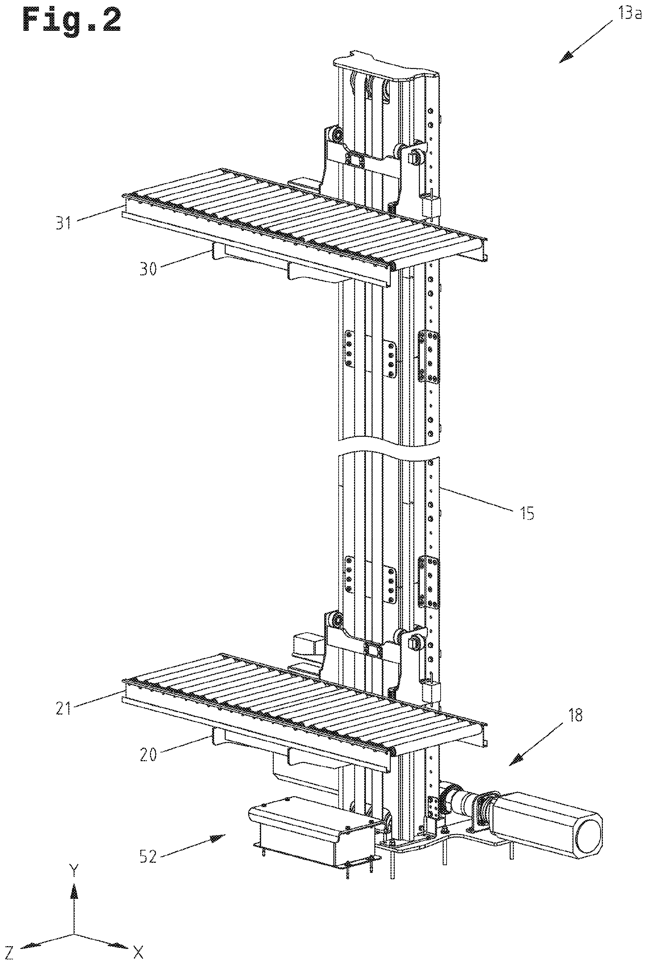

Die erste Ladegut-Hebevorrichtung 13a (siehe Fig. 2 bis 5) umfasst wiederum einen ersten Vertikalmast 15 mit einer ersten Hubführung 16 und einem ersten Hubantrieb 17 mit einer ersten Antriebsstation 18 und einem Zugmitteltrieb 19. Der erste Vertikalmast 15 ist insbesondere im Randbereich der Regalgasse 5 angeordnet, ortsfest aufgestellt und am ersten Lagerregal 2a befestigt. Weiterhin umfasst die erste Ladegut-Hebevorrichtung 13a einen an der ersten Hubführung 16 gelagerten und durch den ersten Hubantrieb 17 vertikal bewegbaren ersten Hubrahmen 20, welcher mit dem Zugmitteltrieb 19 des ersten Hubantriebs 17 verbunden ist. Darüber hinaus umfasst die erste Ladegut-Hebevorrichtung 13a eine am ersten Hubrahmen 20 angeordnete erste Transportvorrichtung 21, welche zumindest zum Transport der Ladegüter 4 zwischen einer der Bereitstellvorrichtungen 14 und der ersten Transportvorrichtung 21 in der x-Richtung x ausgebildet ist. Die Transportvorrichtung 21 umfasst im gezeigten Beispiel motorisierte Förderrollen.

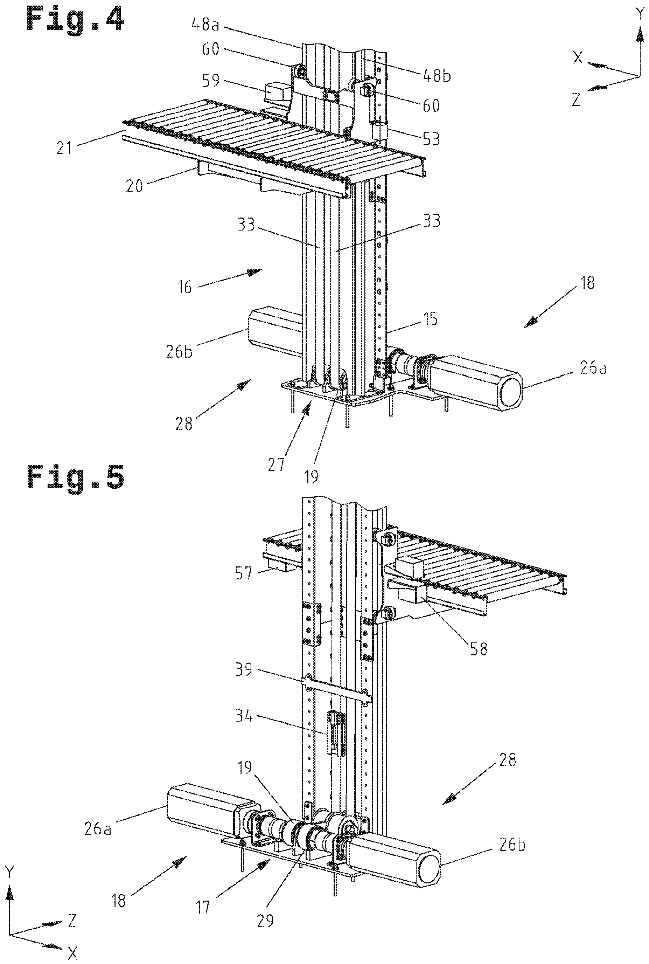

Der erste Hubrahmen 20 mit der ersten Transportvorrichtung 21 ist auf einer der Regalgasse 5 abgewandten Seite des Vertikalmasts 15 angeordnet, und die erste Antriebsstation 18, welche einen ersten Antriebsmotor 26a umfasst, ist auf einer der Regalgasse 5 zugewandten Seite des Vertikalmasts 15 angeordnet. Der erste Antriebsmotor 26a selbst ist dabei innerhalb der Regalgasse 5 angeordnet. Dies ist gut aus den Fig. 3 und 4 erkennbar.

Die erste Ladegut-Hebevorrichtung 13a umfasst in dem in den Fig. 2 bis 5 dargestellten Beispiel einen optionalen ersten Zusatz-Hubantrieb 27 mit einer ersten Zusatz-Antriebsstation 28 und einem daran gekoppelten ersten Zusatz-Zugmitteltrieb 29 sowie einen am ersten Vertikalmast 15 entlang der ersten Hubführung 16 verschiebbar gelagerten ersten Zusatz-Hubrahmen 30, welcher mit Hilfe des ersten Zusatz-Hubantriebs 27 vertikal bewegbar ist. Zudem umfasst die erste Ladegut-Hebevorrichtung 13a eine am ersten Zusatz-Hubrahmen 30 angeordnete erste Zusatz-Transportvorrichtung 31, welche zumindest zum Transport der Ladegüter 4 zwischen einer Bereitstellvorrichtung 14 und der ersten Zusatz-Transportvorrichtung 31 in der x-Richtung x ausgebildet ist. Der erste Hubrahmen 20 und erste Zusatz-Hubrahmen 30 sind über den Hubantrieb 17 und Zusatz-Hubantrieb 27 unabhängig voneinander ansteuerbar, nicht aber starr miteinander verbunden.

An die Ladegut-Manipulationseinheit 11 ist zumindest eine (ausschließlich in Fig. 3 schematisch dargestellte) erste Fördertechnik 25a zum Antransport von Ladegütern 4 zur ersten Ladegut-Hebevorrichtung 13a und zum Abtransport von Ladegütern 4 von der ersten Ladegut-Hebevorrichtung 13a angeschlossen, wobei die erste Ladegut-Hebevorrichtung 13a die erste Fördertechnik 25a und die Bereitstellvorrichtungen 14 fördertechnisch verbindet.

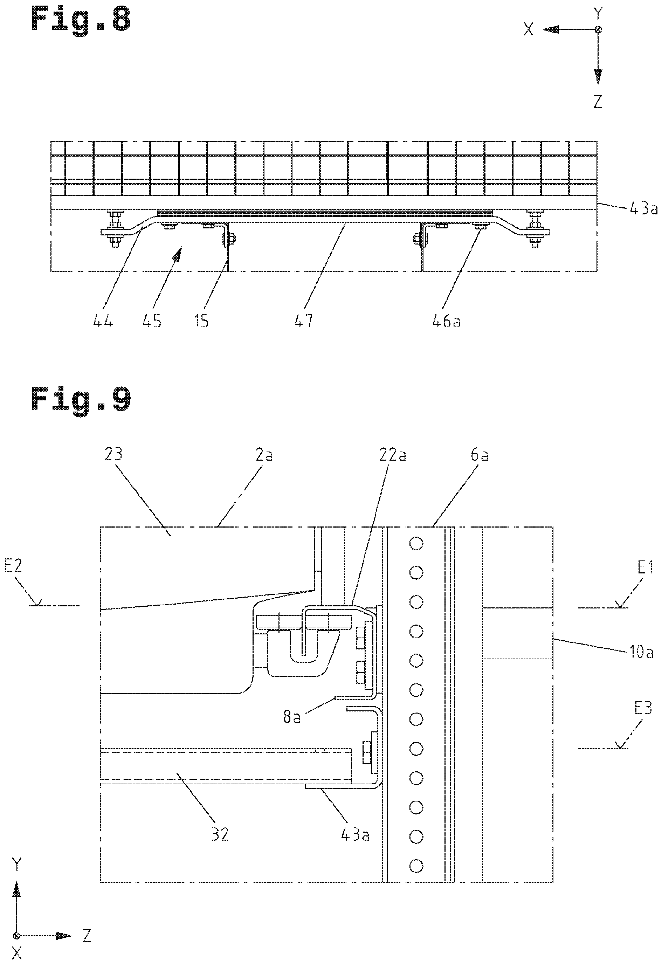

Wie in den Fig. 3 und 9 eingetragen, sind an den vorderen Längstraversen 8a des ersten Lagerregals 2a und an den vorderen Längstraversen 8b des zweiten Lagerregals 2b in übereinander liegenden, horizontalen Fahrebenen E2 jeweils paarweise Führungsbahnen 22a, 22b angeordnet, welche in x-Richtung x entlang dem ersten Lagerregal 2a, entlang dem zweiten Lagerregal 2b und entlang der Bereitstellvorrichtungen 14 verlaufen.

Das Regallagersystem 1 weist zumindest ein automatisiertes Regalbediengerät 23 (wie in den Fig. 3 und 9 schematisch angedeutet) mit zumindest einer Lastaufnahmevorrichtung 24 zum Transport der Ladegüter 4 zwischen den Lagerplätzen 3 und den Bereitstellvorrichtungen 14 auf, das auf einer Fahrebene E2 vor den Lagerplätzen 3 und vor der Bereitstellvorrichtung 14 entlang der Führungsbahnen 22a, 22b in der x-Richtung x verfahrbar ist.

Die Ladegut-Manipulationseinheit 11 umfasst, wie oben beschrieben, eine optionale zweite Puffervorrichtung 12b, die wie die erste Puffervorrichtung 12a ausgebildet ist, und eine optionale zweite Ladegut-Hebevorrichtung 13b, die wie die erste Ladegut-Hebevorrichtung 13a ausgebildet ist. Der zweite Vertikalmast 15 der zweiten Ladegut-Hebevorrichtung 13b ist dabei insbesondere am zweiten Lagerregal 2b befestigt. Außerdem ist zumindest eine (ausschließlich in Fig. 3 schematisch dargestellte) an die Ladegut-Manipulationseinheit 11 angeschlossene zweite Fördertechnik 25b zum Antransport von Ladegütern 4 zur zweiten Ladegut-Hebevorrichtung 13b und zum Abtransport von Ladegütern 4 von der zweiten Ladegut-Hebevorrichtung 13b vorgesehen.

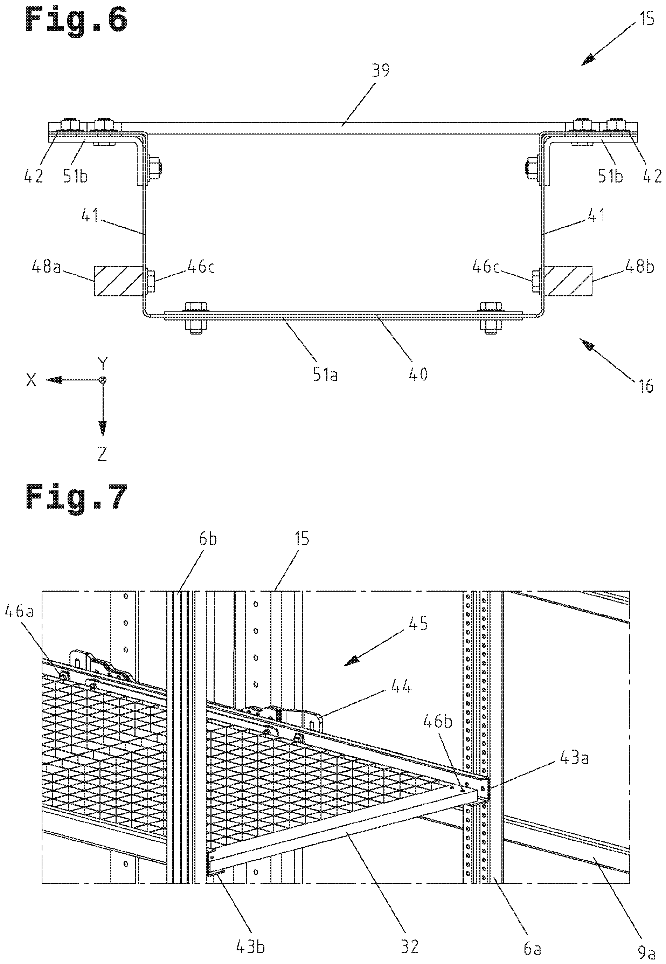

Unterschiedliche Ausführungen dieser Ladegut-Manipulationseinheit 11 (mit einer ersten Ladegut-Hebevorrichtung 13a und einer ersten Puffervorrichtung 12a sowie einer zweiten Ladegut-Hebevorrichtung 13b und einer zweiten Puffervorrichtung 12b) sind beispielweise in der WO 2013/090970 A2, Fig. 6, 16 und WO 2016/033628 A2, Fig. 1, 6, 7 beschrieben.

Die erste Ladegut-Hebevorrichtung 13a und die zweite Ladegut-Hebevorrichtung 13b weisen in dem gezeigten Beispiel somit jeweils einen Hubrahmen 20 und einen Zusatz-Hubrahmen 30 auf, die bevorzugt im Wesentlichen identisch aufgebaut sind und im Wesentlichen in derselben Weise angetrieben und angesteuert werden. Auch ist der dem ersten Lagerregal 2a zugeordnete Teil der Ladegut-Manipulationseinheit 11 in dieser Ausführungsvariante im Wesentlichen gleich aufgebaut wie der dem zweiten Lagerregal 2b zugeordnete Teil der Ladegut-Manipulationseinheit 11. Aus diesem Grund wird die Funktion der Ladegut-Manipulationseinheit 11 im Folgenden im Detail nur für den im Bereich des ersten Lagerregals 2a operierenden Hubrahmen 20 und den mit diesem zusammenwirkenden Komponenten erläutert. Die dabei angegebenen technischen Lehren sind in analoger Weise auf den Zusatz-Hubrahmen 30 und den mit diesem zusammenwirkenden Komponenten sowie auf den dem zweiten Lagerregal 2b zugeordneten Teil der Ladegut-Manipulationseinheit 11 anwendbar. Ausführungsformen, welche sowohl eine erste Ladegut-Hebevorrichtung 13a als auch eine zweite Ladegut-Hebevorrichtung 13b aufweisen, sind nachfolgend gegebenenfalls in Klammern angeführt. Im Speziellen betrifft dies auch jene Fälle, in denen sowohl eine Montagetraverse 43a als auch eine Montagetraverse 43b vorgesehen ist sowie Fälle mit zwei Lagerregalen 2a, 2b.

Durch den Zusatz-Hubrahmen 30 kann die Einlagerleistung und/oder Auslagerleistung der Ladegut-Manipulationseinheit 11 beziehungsweise der ersten / zweiten Ladegut-Hebevorrichtungen 13a, 13b erhöht werden. Im Wesentlichen wird die Leistung verdoppelt, wenn - wie im Beispiel gezeigt - ein Zusatz-Hubrahmen 30 vorgesehen wird, und verdreifacht, wenn noch ein weiterer Zusatz-Hubrahmen 30 vorgesehen wird, usw. Durch das Führen des Hubrahmens 20 und des Zusatz-Hubrahmens 30 auf dem ersten Vertikalmast 15 und insbesondere an ersten Hubführung 16 ist die Erhöhung der Einlagerleistung und/oder Auslagerleistung der Ladegut-Manipulationseinheit 11 vorteilhaft bei gleicher Grundfläche möglich.

Umfasst die erste Ladegut-Hebevorrichtung 13a ausschließlich einen einzigen Hubrahmen 20, so entfällt der Zusatz-Hubantrieb 27. Dasselbe gilt, sofern vorhanden, auch für die zweite Ladegut-Hebevorrichtung 13b.

Die Fig. 3 zeigt das Regallagersystem 1 in Draufsicht mit den angedeuteten Lagerregalen 2a, 2b und dem angedeuteten Regalbediengerät 23. Aus der Fig. 3 ist insbesondere gut erkennbar, dass die Bereitstellvorrichtungen 14 der ersten Puffervorrichtung 12a in der x-Richtung x benachbart an einer der Seiten der ersten Ladegut-Hebevorrichtung 13a (nämlich in der Darstellung an der oberen Seite) angeordnet sind. Denkbar wäre aber auch, dass die Bereitstellvorrichtungen 14 in der x-Richtung x benachbart zu beiden Seiten der ersten Ladegut-Hebevorrichtung 13a angeordnet sind.

Im Beispiel der Fig. 3 kann die erste Ladegut-Hebevorrichtung 13a ausschließlich zum Einlagern von Ladegütern 4 und die zweite Ladegut-Hebevorrichtung 13b ausschließlich zum Auslagern von Ladegütern 4 dienen (oder auch umgekehrt). Die der ersten Ladegut-Hebevorrichtung 13a benachbarten Bereitstellvorrichtungen 14 dienen dann der Einlagerung von Ladegütern 4 und die der zweiten Ladegut-Hebevorrichtung 13b benachbarten Bereitstellvorrichtungen 14 dienen dann der Auslagerung von Ladegütern 4 (oder auch umgekehrt).

Die Transportvorrichtung 21 kann zum Beispiel durch eine Fördervorrichtung oder eine Lastaufnahmevorrichtung gebildet sein, wie dies beispielweise in der WO 2013/090970 A2 beschrieben ist.

In dem gezeigten Beispiel sind die Bereitstellvorrichtungen 14 als aktive Bereitstellvorrichtungen ausgebildet und umfassen jeweils eine Fördervorrichtung. Konkret ist die Fördervorrichtung hier durch mehrere motorisch angetriebenen Förderelemente, etwa durch mehrere motorisch angetriebene Förderrollen, gebildet. Die Bereitstellvorrichtungen 14 können aber auch als passive Bereitstellvorrichtungen ausgebildet sein und jeweils einen stationären Auflagetisch (ohne Förderelemente) für das Zwischenpuffern eines oder mehrerer Ladegüter 4 umfassen.

Durch die spezielle Anordnung des Antriebsmotors 26a der Antriebsstation 18 (sofern ausschließlich der Hubrahmen 20 und die Transportvorrichtung 21 vorgesehen sind) oder der Antriebsmotoren 26a, 26b der Antriebsstation 18 und der Zusatz-Antriebsstation 28 (sofern auch der Zusatz-Hubrahmen 30 und die Zusatz-Transportvorrichtung 31 vorgesehen sind), ist der Antriebsmotor 26a beziehungsweise sind die Antriebsmotoren 26a, 26b von der Regalgasse 5 aus gut zugänglich, wodurch die Montage und die Wartung desselben auf einfache Weise möglich ist. Darüber hinaus kann der Hubrahmen 20 besonders weit in Bodennähe gefahren werden, da die Antriebsmotoren 26a, 26b außerhalb des Bewegungsbereichs des Hubrahmens 20 angeordnet ist (und nicht wie im Stand der Technik darunter). Eine untere Anfahrhöhe (das heißt eine unterste Höhenstellung des Hubrahmens 20 am Vertikalmast 15) beträgt insbesondere weniger als 500 mm, im Speziellen 375 mm.

In dem gezeigten Beispiel sind die Antriebsachsen A (siehe Fig. 3) der Antriebsmotoren 26a, 26b der ersten Ladegut-Hebevorrichtung 13a (oder der Antriebsmotoren 26a, 26b der ersten und zweiten Ladegut-Hebevorrichtungen 13a, 13b) in der x-Richtung x ausgerichtet. Auf diese Weise können die Antriebsmotoren 26a, 26b besonders platzsparend in der Regalgasse 5 angeordnet werden, wodurch ein Passieren der Ladegut-Hebevorrichtungen) 13a, 13b, beispielsweise durch Wartungspersonal, auf einfache Weise möglich ist. Insbesondere eignet sich diese Anordnung dann, wenn die Regalgasse 5 relativ schmal ist und/oder wenn, so wie dies im gezeigten Beispiel der Fall ist, mehrere Ladegut-Hebevorrichtungen 13a, 13b in der Regalgasse 5 einander gegenüberliegend (hier spiegelbildlich um die x-Achse einander gegenüberliegend) angeordnet sind. Darüber hinaus ist die Bauhöhe der Ladegut-Manipulationseinheit 11 wegen der liegend angeordneten Antriebsmotoren 26a, 26b innerhalb der Regalgasse 5 vergleichsweise gering. Dementsprechend können die Regalbediengeräte 23 die Ladegut-Hebevorrichtungen 13a, 13b in nur niedriger Höhe passieren. Auch Gehstege 32 können in einer vergleichsweise niedrigen Wartungsebene E3 angeordnet sein. Wird die Ladegut-Hebevorrichtungen 13a, 13b im Boden versenkt, so ist nur eine wenig tiefe Grube dafür notwendig.

Alternativ wäre auch denkbar, dass die Antriebsachsen A der Antriebsmotoren 26a, 26b vertikal ausgerichtet sind (nicht dargestellt). Auch bei dieser Anordnung ist ein Passieren der Ladegut-Manipulationseinheit 11 auf einfache Weise möglich, und die Anordnung eignet sich wiederum insbesondere für relativ schmale Regalgassen 5 und/oder den Fall, dass mehrere Ladegut-Hebevorrichtungen 13a, 13b (insbesondere spiegelbildlich um die x-Achse) in der Regalgasse 5 einander gegenüberliegend angeordnet sind.

Ergänzend zeigen die Fig. 4 und 5 eine Detailansicht der im Regallagersystem 1 nach Fig. 1 eingesetzten Ladegut-Hebevorrichtung 13a, die Fig. 4 von schräg hinten, die Fig. 5 von schräg vorne. Die im Regallagersystem 1 nach Fig. 1 zusätzlich eingesetzte Ladegut-Hebevorrichtung 13b entspricht vom konstruktiven Aufbau und der Funktion der Ladegut-Hebevorrichtung 13a.

Gut erkennbar sind in den Fig. 4, 5, 12 und 14 das Zugmittel 33, das in diesem konkreten Beispiel als Zahnriemen ausgebildet ist, und das Spannsystem 34, das die beiden Enden des Zugmittels 33 verbindet. Das Zugmittel 33, mit welchem der Hubrahmen 20 verbunden (bewegungsgekoppelt) ist, ist über ein mit dem Antriebsmotor 26a gekoppeltes Antriebsrad 35, ein unteres Umlenkrad 36, ein oberes Umlenkrad 37 und ein Führungsrad 38 geführt. Weiterhin sind in der Fig. 5 insbesondere Verbindungsstreben 39 für den Vertikalmast 15 sichtbar. Das Zugmittel 33, mit welchem der (optionale) Zusatz-Hubrahmen 30 verbunden (bewegungsgekoppelt) ist, ist über ein mit dem Antriebsmotor 26b gekoppeltes Antriebsrad 35, ein unteres Umlenkrad 36, ein oberes Umlenkrad 37 und ein Führungsrad 38 geführt.

Die Fig. 6 zeigt nun einen Horizontalschnitt durch den Vertikalmast 15. Der Vertikalmast 15 weist in diesem Beispiel einen offenen Profilquerschnitt auf. Der Profilquerschnitt umfasst eine Profilbasis 40, von dieser vorragende (und parallel verlaufende) Profilschenkel 41 und an den freien Enden der Profilschenkel 41 abgewinkelte Montageschenkel 42, an denen der Vertikalmast 15 am ersten Lagerregal 2a befestigt ist. Der Profilquerschnitt ist in diesem Fall also U-förmig mit nach außen gebogenen Montageschenkeln 42. Denkbar wäre aber auch, dass der Profilquerschnitt C-förmig (mit nach innen gebogenen Montageschenkeln 42) ist.

Durch die offene Bauweise sind die Anbauten am Vertikalmast 15 gut zugänglich, wodurch nicht nur die Herstellung der Ladegut-Manipulationseinheit 11, sondern auch deren Wartung vereinfacht wird. Die Montageschenkel 42 sind um eine Vertikalachse des Vertikalmasts 15 nach außen gerichtet und konkret um eine vertikale Achse abgebogen und bieten eine Auflagefläche für die Montage des Vertikalmasts 15 am ersten Lagerregal 2a.

Eine besonders vorteilhafte Anbindung des Vertikalmasts 15 an das erste Lagerregal 2a ist in den Fig. 7 und 8 dargestellt. Die Fig. 7 zeigt eine Detailansicht des Regallagersystems 1 im Bereich der Anbindung des Vertikalmasts 15 an das erste Lagerregal 2a in Schrägansicht, die Fig. 8 eine Draufsicht.

Konkret umfasst das erste Lagerregal 2a Montagetraversen 43a, welche zusätzlich zu den vorderen Längstraversen 8a an den vorderen Regalstehern 6a befestigt sind und parallel zu den vorderen Längstraversen 8a verlaufen. Das zweite Lagerregal 2b umfasst Montagetraversen 43b, welche zusätzlich zu den vorderen Längstraversen 8b an den vorderen Regalstehern 6b befestigt sind und parallel zu den vorderen Längstraversen 8b verlaufen. Die Fig. 9 zeigt dazu eine Detailansicht auf einen Regalsteher 6a, eine Längstraverse 8a und eine Montagetraverse 43a des Regallagersystems 1.

Der Vertikalmast 15 der Ladegut-Hebevorrichtung 13a weist einen der Regalgasse 5 zugewandten Montageabschnitt 45 auf, mit dem die erste Ladegut-Hebevorrichtung 13a an den Montagetraversen 43a gelagert ist. Der Vertikalmast 15 der Ladegut-Hebevorrichtung 13b, sofern diese vorgesehen ist, weist einen der Regalgasse 5 zugewandten Montageabschnitt 45 auf, mit dem die zweite Ladegut-Hebevorrichtung 13b an den Montagetraversen 43b gelagert ist. Konkret ist die Verbindung zwischen dem Vertikalmast 15 und den Montagetraversen 43a (43a, 43b) durch gekröpfte (das heißt doppelt gewinkelte) Befestigungselemente 44 hergestellt. Alternativ könnten auch einfach gewinkelte Befestigungselemente 44 eingesetzt werden.

Im Speziellen wird der Vertikalmast 15 über Verbindungsmittel 46a mit dem Lagerregal 2a, insbesondere mit den Montagetraversen 43a (43a, 43b), verbunden. Als Verbindungsmittel 46a sind im gezeigten Beispiel Schrauben vorgesehen. Denkbar ist aber auch eine Verbindung durch Nieten oder durch Klemmen. Durch die Befestigung des Vertikalmasts 15 am Lagerregal 2a (2a, 2b), insbesondere an mehreren vertikal übereinander liegenden Montageabschnitten 45, ist der Vertikalmast 15 trotz der offenen Bauweise außerordentlich stabil, insbesondere gegen Verdrehung, selbst bei Masthöhen von 30 bis 40 m. Darüber hinaus ist von Vorteil, dass der Materialeinsatz gering ist und auch das Gewicht auf ein Minimum reduziert wird. Dadurch ist eine einfachere Montage mit geringerem technischen Aufwand möglich und auch die Transportkosten sind gering. Die Stabilität des Vertikalmasts 15 wird durch die Verbindungsstreben 39 noch weiter gesteigert.

Auch wenn die offene Bauweise des Vertikalmasts 15 von Vorteil ist, wäre grundsätzlich auch denkbar, dass der Vertikalmast 15 einen geschlossenen Profilquerschnitt aufweist und insbesondere als Rechteckrohr ausgebildet ist. Der Vertikalmast 15 weist dann eine besonders hohe Torsionssteifigkeit auf.

Der Vertikalmast 15 der Ladegut-Hebevorrichtung 13a (oder die Vertikalmasten 15 der ersten / zweiten Ladegut-Hebevorrichtung 13a, 13b) ist in diesem Beispiel nicht wie üblich mit den vorderen Längstraversen 8a verbunden, sondern eben mit den gesondert vorgesehenen Montagetraversen 43a (43a, 43b). Dadurch kann der Hubrahmen 20 hochdynamisch am Vertikalmast 15 verstellt werden, ohne dass es zu einer maßgeblichen Schwingungsübertragung auf die vorderen Längstraversen 8a und damit auf die Führungsschienen für das Regalbediengerät 23 und die Lagerplätze 3 kommt (der Begriff "hochdynamisch" bedeutet im gegebenen Zusammenhang insbesondere Geschwindigkeiten von > 6 m/s und Beschleunigungen von > 7 m/s$^2$). Insbesondere kann so ein unerwünschtes Bewegen oder "Wandern" der auf den Lagerplätzen 3 abgestellten Ladegüter 4, so wie es im Stand der Technik auftreten kann und Probleme beim Auslagern der Ladegüter 4 verursachen kann, verhindert oder zumindest verringert werden.

Die gewinkelte beziehungsweise gekröpfte Bauweise der Befestigungselemente 44 erlaubt zudem einerseits eine solide und sehr einfache Montage des Vertikalmasts 15 an einer Montagetraverse 43a, andererseits aber auch eine weitere Reduktion der Schwingungsübertragung zwischen der Ladegut-Hebevorrichtung 13a (oder der ersten / zweiten Ladegut-Hebevorrichtung 13a, 13b) und den Ladegütern 4. Konkret kann das Befestigungselement 44 im Wesentlichen als Biegefeder wirken. Bei der Auswahl des Materials für das Befestigungselement 44 sollte darauf geachtet werden, dass das Material über ausreichende Dämpfungseigenschaften verfügt, um unerwünschte Resonanzerscheinungen zu unterbinden. Insbesondere ist es von Vorteil, wenn das Befestigungselement 44 aus einem Material mit einem Elastizitätsmodul von weniger als 40.000 MPa gefertigt ist. Durch den geringen Elastizitätsmodul wird die Gefahr einer Schwingungsübertragung zwischen der Ladegut-Hebevorrichtung 13a (oder der ersten / zweiten Ladegut-Hebevorrichtung 13a, 13b) und den Ladegütern 4 besonders gut verringert.

Generell ist anzumerken, dass die Wirkung als Biegefeder nicht an eine gebogene oder gekröpfte Bauweise des Befestigungselements 44 gebunden ist. Vielmehr ist eine freie Biegelänge zwischen dem Anbindungspunkt des Vertikalmasts 15 an das Befestigungselement 44 und dem Anbindungspunkt der Montagetraverse 43a (43a, 43b) an das Befestigungselement 44 maßgeblich.

In der Fig. 8 ist erkennbar, dass zur lotrechten Ausrichtung des Vertikalmasts 15 beziehungsweise zum Abstandsausgleich zwischen dem Vertikalmast 15 und den Montagetraversen 43a (43a, 43b) Futterplatten 47 in verschiedener Anzahl und/oder Stärke zwischen dem Vertikalmast 15 und den Montagetraversen 43a eingefügt werden können. Vorteilhaft ist es, wenn auch die Futterplatten 47 aus einem Material mit einem Elastizitätsmodul von weniger als 40.000 MPa gefertigt sind.

Als Material für die Befestigungselemente 44 und/oder die Futterplatten 47 eignen sich somit insbesondere Kunststoffe, wie zum Beispiel Teflon oder faserverstärkter Kunststoff. Denkbar ist aber auch der Einsatz von Gummi oder Holz (insbesondere Sperrholz), das ebenfalls über ausgezeichnete Dämpfungseigenschaften verfügt. Selbstverständlich ist auch der Einsatz von anderen Verbundmaterialien als faserverstärktem Kunststoff denkbar, beispielsweise Kunststoff-Holz-Compound-Materialien.

Auch wenn die Futterplatte 47 vorzugsweise aus einem Material mit einem Elastizitätsmodul von weniger als 40.000 MPa gefertigt wird, ist es grundsätzlich denkbar, dass die Futterplatte 47 aus einem Metall (insbesondere aus Stahl) gefertigt ist. In diesem Fall kann die Futterplatte 47 als "Futterblech" bezeichnet werden.

Der Vertikalmast 15 ist in diesem Beispiel in der z-Richtung z seitlich versetzt zur Regalgasse 5, das heißt, außerhalb der Regalgasse 5 an der Rückseite der Montagetraversen 43a (43a, 43b) angeordnet. Denkbar wäre aber auch, dass der Vertikalmast 15 an der Vorderseite der Montagetraversen 43a (43a, 43b) und damit innerhalb der Regalgasse 5 in deren Randbereich angeordnet ist.

Die Montagetraversen 43a (43a, 43b) eignen sich nicht nur zur Anbindung des Vertikalmasts 15 an das Lagerregal 2a (2a, 2b), sondern auch zur Lagerung der Gehstege 32, welche in der Regalgasse 5 in übereinander liegenden Wartungsebenen E3 angeordnet und an den Montagetraversen 43a des ersten Lagerregals 2a und an den Montagetraversen 43b des zweiten Lagerregals 2b befestigt sind. Durch diese Maßnahmen werden im Regallagersystem 1 Montage- beziehungsweise Wartungsebenen E3 vorgesehen, die durch Montage- beziehungsweise Wartungspersonal betreten werden können, um im Regallagersystem 1 Montagearbeiten beziehungsweise Wartungsarbeiten durchführen zu können. Als Verbindungsmittel 46b (siehe Fig. 7) zwischen den Gehstegen 32 und den Montagetraversen 43a können wiederum Schrauben, Nieten oder Klemmen vorgesehen sein.

Aus der Fig. 6 ist zudem gut ersichtlich, dass die erste Hubführung 16 zur Führung des ersten Hubrahmens 20 (und sofern vorhanden des Zusatz-Hubrahmens 30) in diesem Beispiel eine erste Führungsleiste 48a und eine zweite Führungsleiste 48b umfasst, welche voneinander getrennt und parallel in Längsrichtung des Vertikalmasts 15 verlaufen und über Verbindungsmittel 46c bevorzugt lösbar mit dem Vertikalmast 15 verbunden sind. Insbesondere sind die erste Führungsleiste 48a und die zweite Führungsleiste 48b aus blank gezogenem oder geschliffenem Flachstahl gebildet, der Gewindebohrungen zur Befestigung desselben auf dem Vertikalmast 15 mit Hilfe von Schrauben aufweist. Trotz kostengünstiger und modularer Bauweise läuft der Hubrahmen 20 an der ersten Hubführung 16 ruhig, und es werden nur geringe Vibrationen in den Vertikalmast 15 eingeleitet.

Von Vorteil ist es auch, wenn der Vertikalmast 15 und die erste Hubführung 16 sowie die vorderen Regalsteher 6a und hinteren Regalsteher 7a des ersten Lagerregals 2a aus demselben Material hergestellt sind, insbesondere aus Stahl. Durch die vorgeschlagenen Maßnahmen können insbesondere temperaturbedingte Verspannungen und/oder Spiel zwischen den Bauteilen des Regallagersystems 1 vermieden werden. Diese Ausführungsvariante eignet sich daher insbesondere für Regallagersysteme 1, die in einem breiten Temperaturbereich eingesetzt werden sollen oder Temperaturschwankungen ausgesetzt sind. Beispielsweise betrifft dies Regallagersysteme 1, die bei Raumtemperatur errichtet werden, die aber dann bei sehr tiefen Temperaturen betrieben werden, so wie dies beispielsweise bei Tiefkühllagern der Fall ist. Generell beträgt der Temperaturbereich, in dem Regallagersysteme 1 eingesetzt werden rund -40°C bis +40°C. Durch Vermeiden von Spiel zwischen den Bauteilen kann insbesondere die Geräuschentwicklung beim Betrieb der Ladegut-Hebevorrichtung 13a (oder der ersten / zweiten Ladegut-Hebevorrichtung 13a, 13b) und der Regalbediengeräte 23 verringert werden.

Von Vorteil ist es im obigen Zusammenhang auch, wenn zusätzlich die vorderen Längstraversen 8a sowie die hinteren Längstraversen 9a und/oder die Montagetraversen 43a aus dem gleichen Material hergestellt sind wie der Vertikalmast 15, die erste Hubführung 16 und die vorderen und hinteren Regalsteher 6a, 7a. Dadurch können temperaturbedingte Verspannungen und/oder Spiel zwischen den Bauteilen des Regallagersystems 1 noch besser vermieden werden.

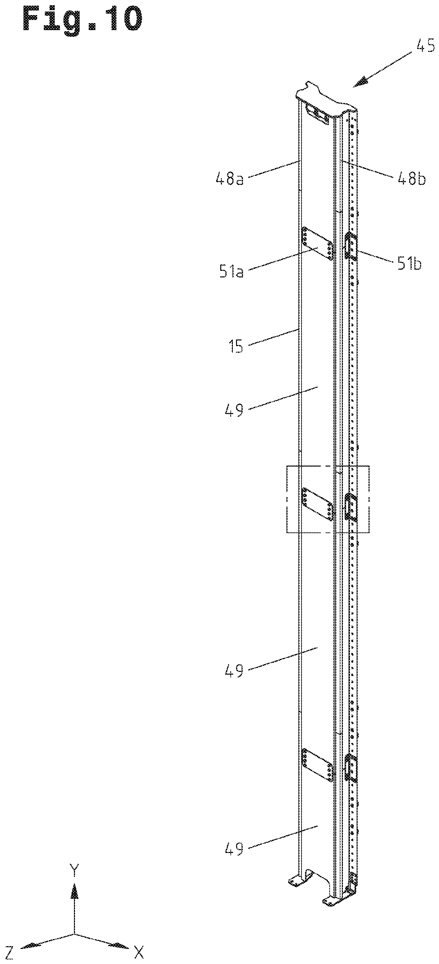

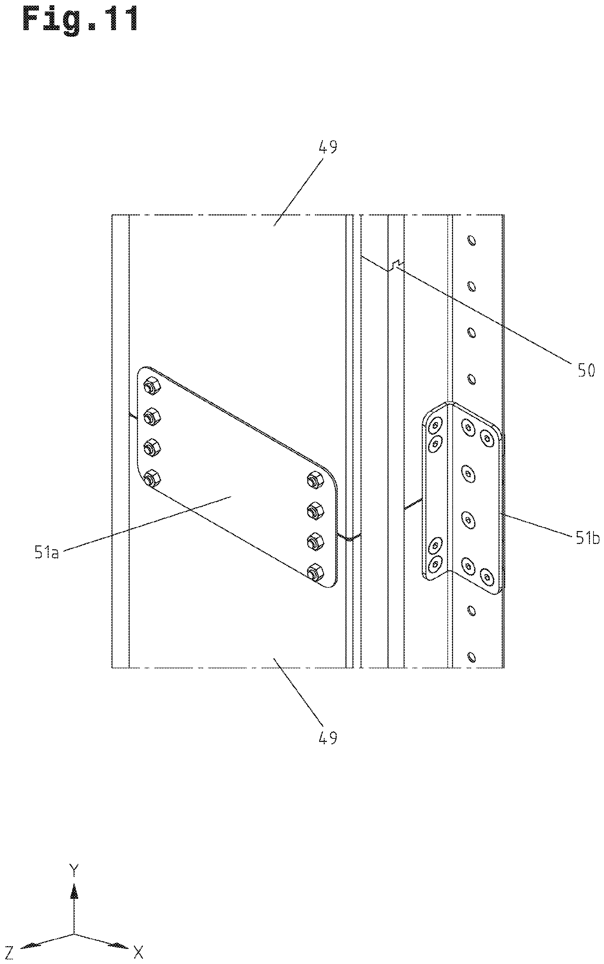

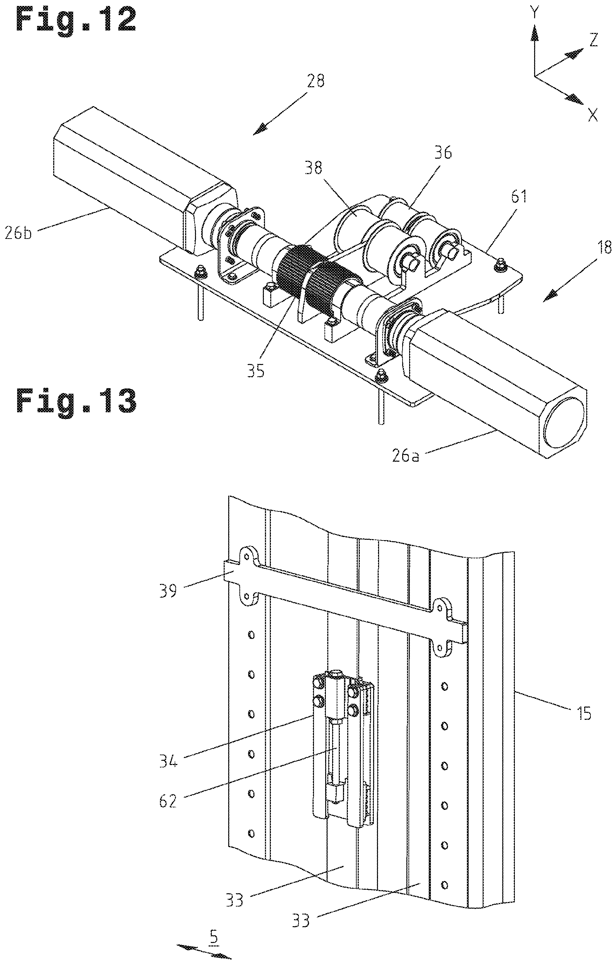

In dem gezeigten Beispiel weist der Vertikalmast 15 vorteilhaft eine Vielzahl von Mastsegmenten 49 auf, die im Wesentlichen spaltfrei vertikal übereinander zusammengefügt sind, wie in Fig. 10 dargestellt. Zudem ist die erste Hubführung 16 zur Führung des ersten Hubrahmens 20 vorteilhaft in vertikaler Richtung durch formkomplementäre Stoßverbindungen 50 unterteilt. Insbesondere kann eine Teilung zwischen den Mastsegmenten 49 in vertikaler Richtung versetzt zu den Stoßverbindungen 50 der Hubführung 16 angeordnet sein, so wie das im vorliegenden Beispiel der Fall ist. Die Fig. 11 zeigt dazu den im Regallagersystem 1 eingesetzten Vertikalmast 15 in Schrägansicht, und Fig. 12 zeigt eine Detailansicht des Vertikalmasts 15.

Durch die vorgeschlagenen Maßnahmen wird einerseits der Transport des Vertikalmasts 15 und dessen Einbringung in das Gebäude am Aufstellort erleichtert, andererseits ermöglicht dessen Teilung einen modularen Aufbau der Ladegut-Hebevorrichtung 13a. Konkret können je nach geforderter Hubhöhe verschieden viele Mastsegmente 49 zu einem Vertikalmast 15 verbaut werden. Die Mastsegmente 49 werden bevorzugt miteinander verschraubt, beispielsweise mit Verbindungsplatten 51a, 51b.

Weil die Stoßverbindung der Hubführung 16 nicht auf gleicher Höhe wie eine Teilung zwischen zwei Mastsegmenten 49 angeordnet ist, wirkt sich eine (unerwünschte) Verlagerung von Mastsegmenten 49 zueinander, wie sie beispielsweise durch Verspannungen der Mastsegmente 49 zueinander auftreten kann, nicht oder nur in geringem Maß auf die Stoßverbindungen 50 (siehe Fig. 11) der Hubführungen 16 aus. Dadurch kann das Auftreten von Vibrationen beziehungsweise Schwingungen beim Bewegen des Hubrahmens 20 gering gehalten werden. Weiterhin wird eine Biegebelastung, die vom Hubrahmens 20 in die Hubführungen 16 am Vertikalmast 15 eingeleitet wird, über den Stoß der Mastsegmente 49 hinweg geleitet.

Vorteilhaft umfasst die Ladegut-Manipulationseinheit 11 eine energieabsorbierende Deformationsvorrichtung 52, welche unterhalb des ersten Hubrahmens 20 fix montiert ist, insbesondere auf einer der Regalgasse 5 abgewandten Seite des Vertikalmasts 15 (zum Beispiel auf einem fix stehenden Bauteil der Ladegut-Manipulationseinheit 11 oder direkt auf einem Fußboden des Regallagersystems 1), wie in den Fig. 1, 2 und 14 ersichtlich.

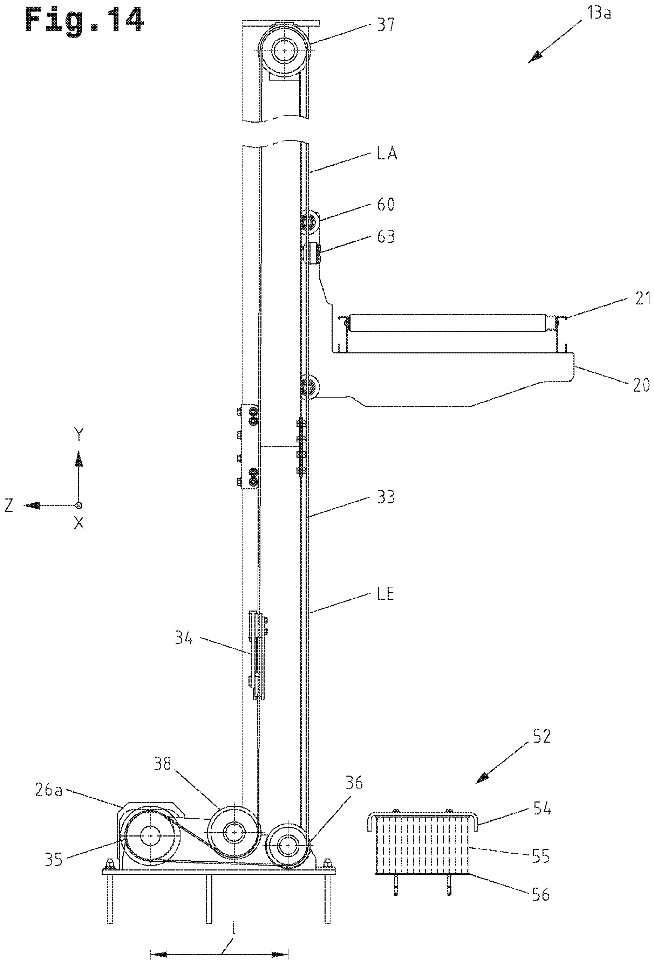

Die Fig. 2 und 14 zeigen dazu eine Detailansicht der an der Ladegut-Manipulationseinheit 11 eingesetzten und unter dem Hubrahmen 20 angeordneten Deformationsvorrichtung 52.

Mit Hilfe der Deformationsvorrichtung 52 können Schäden an der Ladegut-Manipulationseinheit 11 gering gehalten werden, wenn der Zugmitteltrieb 19 versagen sollte (weil z.B. ein Zugmittel 33 des Zugmitteltriebs 19 reißt) und dem Hubrahmen 20 nicht eine Sicherheitsbremse 53 zugeordnet ist oder eine Sicherheitsbremse 53 für den Hubrahmen 20 nicht schnell genug reagieren sollte. Befindet sich der Hubrahmen 20 beim Versagen des Zugmitteltriebs 19 unterhalb jener Höhe, welche der Verzögerungs- oder Einfallzeit der Sicherheitsbremse 53 entspricht, so ist die Sicherheitsbremse 53 völlig wirkungslos. Im Fall, dass sich der Hubrahmen 20 beim Reißen des Zugmittels 33 gerade mit seiner maximalen Geschwindigkeit nach unten bewegt, tritt das Problem noch stärker zu Tage. Mit Hilfe der Deformationsvorrichtung 52 kann der Aufprall des Hubrahmens 20 dennoch gedämpft werden. Vorteilhaft weist eine Deformationsvorrichtung 52 in der Regel eine niedrigere Bauhöhe auf als zum Beispiel Hydraulikdämpfer. Der Hubrahmen 20 kann daher im Normalbetrieb weiter nach unten bewegt werden als dies beispielsweise beim Einsatz von Hydraulikdämpfern der Fall wäre.

In dem gezeigten Beispiel umfasst die energieabsorbierende Deformationsvorrichtung 52 eine Kraftverteilplatte 54 (siehe Fig. 14) mit einer Aufprallfläche für den ersten Hubrahmen 20, unterhalb der Kraftverteilplatte 54 einen durch Krafteinwirkung plastisch deformierbaren Wabenkörper 55, welcher eine bei Kollision des ersten Hubrahmens 20 mit der Kraftverteilplatte 54 entstehende Aufprallenergie zumindest zum Teil absorbiert, und unterhalb des Wabenkörper 55 eine Montageplatte 56 zur Montage der Deformationsvorrichtung 52.

Vorteilhaft verlaufen die Hohlräume des Wabenkörpers 55 in vertikaler Richtung. Durch die Wabenstruktur ergibt sich ein günstiges Steifigkeits- zu Volumenverhältnis beziehungsweise ein günstiges Steifigkeits- zu Gewichtsverhältnis. Das heißt, die Deformationsvorrichtung 52 ist trotz hoher Energieaufnahme bei der Verformung klein beziehungsweise leicht. Dadurch kann eine Deformationsvorrichtung 52 mit nur geringer Bauhöhe bereitgestellt werden, welcher das Bewegen des Hubrahmens 20 bis knapp über Bodenhöhe ermöglicht. Zudem kann das Stauchverhalten der Deformationsvorrichtung 52 durch die Wabenstruktur gut beeinflusst werden. Schließlich ergeben sich auch günstige Herstell- beziehungsweise Austauschkosten.

Durch die Kraftverteilplatte 54 werden die beim Aufschlagen des Hubrahmens 20 auftretenden Kräfte gleichmäßig in den darunter angeordneten Wabenkörper 55 eingeleitet, und der Wabenkörper 55 wird gleichmäßig verformt. Dies trifft auch dann zu, wenn der Hubrahmen 20 in vertikaler Projektion eine nur geringe Fläche aufweist, beziehungsweise die Kontaktfläche zwischen dem Hubrahmen 20 und der Deformationsvorrichtung 52 nur klein ist. Bevorzugt ist die Kraftverteilplatte 54 mit dem Wabenkörper 55 verbunden, insbesondere verklebt. Bevorzugt ist auch die Montageplatte 56 mit dem Wabenkörper 55 verbunden, insbesondere verklebt.

Vorteilhaft ist die Biegesteifigkeit der Kraftverteilplatte 54 um eine horizontale Achse zumindest zweimal so groß ist wie die Drucksteifigkeit des Wabenkörpers 55 in vertikaler Richtung. Günstig ist es auch, wenn ein Unterschied der vertikalen Verformung des Wabenkörpers 55 maximal 10% der Bauhöhe des unverformten Wabenkörpers 55 beträgt, wenn die maximale Verformung 75% der Bauhöhe des unverformten Wabenkörpers 55 beträgt. Mit anderen Worten beträgt die geringste Verformung dann 65% der Bauhöhe des unverformten Wabenkörpers 55. Mit anderen Worten, sollte der Wabenkörper nachgeben 55 und sich deformieren bevor sich die Kraftverteilplatte 54 maßgeblich verformt.

An dieser Stelle wird angemerkt, dass es grundsätzlich auch möglich wäre, die Kraftverteilplatte 54 auf dem Hubrahmen 20 anzuordnen. Um die bewegte Masse des Hubrahmens 20 gering zu halten, ist es jedoch von Vorteil, die Kraftverteilplatte 54 fix am Wabenkörper 55 zu montieren. Dadurch kann der Hubrahmen 20 in Leichtbauweise hergestellt werden.

Am ersten Hubrahmen 20 kann auch ein Beschleunigungssensor 57 zur Detektion von zumindest einer Beschleunigung in vertikaler Richtung angeordnet sein (siehe Fig. 5). In den Fig. 4 und 5 sind auch ein optischer Entfernungs-Messsensor 58 zur Detektion der Vertikalposition des ersten Hubrahmens 20 und eine Datenlichtschranke 59 (beachte auch das am Boden angeordnete Gegenstück) zur optischen Datenübertragung zum oder vom ersten Hubrahmen 20 gezeigt. Die Ladegut-Hebevorrichtung 13a (oder die erste / zweite Ladegut-Hebevorrichtung 13a, 13b) umfasst in diesem Beispiel den optischen Entfernungs-Messsensor 58 und/oder die Datenlichtschranke 59.

Mithilfe des Beschleunigungssensors 57 kann insbesondere eine übermäßige vertikale Beschleunigung, wie sie beim unerwünschten Herunterfallen des Hubrahmens 20 auftritt, erkannt werden. In Folge können Gegenmaßnahmen eingeleitet werden, wie zum Beispiel das Aktivieren der Sicherheitsbremse 53. Denkbar ist weiterhin, dass der Beschleunigungssensor 57 zur Detektion unerwünschter beziehungsweise unerwarteter Vibrationen und Schwingungen eingesetzt wird, so wie sie beispielsweise bei einem Defekt der Ladegut-Hebevorrichtung 13a (etwa einem kaputten Lager an einer Führungsrolle 60 des Hubrahmens 20) auftreten können. Grundsätzlich ist die Detektion einer übermäßigen Vertikalbeschleunigung nicht an die Verwendung eines Beschleunigungssensors 57 gebunden, sondern es kann für diesen Zweck natürlich auch der optische Entfernungs-Messsensor 58 eingesetzt werden, nämlich indem das zeitliche Differenzial seines Positionssignals gebildet wird.

Denkbar ist insbesondere auch die Kombination beziehungsweise Integration eines optischen Entfernung-Messsensors 58 und der optischen Datenübertragung in einem einzigen Gerät. Der Aufbau der Ladegut-Hebevorrichtung 13a ist dann daher besonders kompakt.

Fig. 12 zeigt nun eine Detailansicht der im Regallagersystem 1 eingesetzten Antriebsstation 18 und der optionalen Zusatz-Antriebsstation 28 in Schrägansicht;

Gut erkennbar ist, dass die Antriebsstation 18 des ersten Hubantriebs 17 und die Zusatz-Antriebsstation 28 des ersten Zusatz-Hubantriebs 27 auf einer gemeinsamen Grundplatte 61 angeordnet sind. Dadurch ist ein modularer Aufbau der Ladegut-Manipulationseinheit 11 möglich. Je nach geforderter Einlagerleistung und/oder Auslagerleistung der Ladegut-Manipulationseinheit 11 wird ein Antriebsmotor 26a auf der Grundplatte 61 angeordnet, oder es werden mehrere Antriebsmotoren 26a, 26b auf der gemeinsamen Grundplatte 61 angeordnet. Die Grundplatte 61 kann (nicht dargestellte) Mittel zum Ausrichten / Positionieren des darauf aufzustellenden Vertikalmasts 15 und/oder der Lagerstellen für das Antriebsrad 35, das untere Umlenkrad 36, das Führungsrad 38, etc. umfassen. Diese Mittel können beispielsweise durch Ausnehmungen (zum Beispiel Bohrungen), Vertiefungen und/oder Erhöhungen gebildet sein. Aufwändige Maßnahmen zur Ausrichtung können daher unterbleiben.

In dem gezeigten Beispiel ist der erste Vertikalmast 15 auf der Grundplatte 61 angeordnet. Wenn die Grundplatte 61, so wie das im gezeigten Beispiel der Fall ist, Mittel zum Ausrichten der darauf angeordneten Bauteile (also z.B. des Vertikalmasts 15 und des ersten Hubantriebs 17, usw.) zueinander aufweist, können der erste Hubantrieb 17 und der erste Vertikalmast 15 bei der Montage der Ladegut-Hebevorrichtung 13a "automatisch" zueinander ausgerichtet werden. Aufwändige Maßnahmen zur Ausrichtung der Bauteile zueinander können daher unterbleiben. Besonders vorteilhaft ist es, wenn die Grundplatte 61 in einem ersten Schritt auf einer Aufstellfläche ausgerichtet (nivelliert) und montiert wird, ehe der Vertikalmast 15 in einem zweiten Schritt von oben auf die Grundplatte 61 aufgesetzt und an dieser befestigt wird. Dadurch ist eine lotrechte Ausrichtung des Vertikalmasts 15 (insbesondere des untersten Mastsegments 49) gegeben. Dies vereinfacht die Montage der Ladegut-Hebevorrichtung 13a (oder der ersten / zweiten Ladegut-Hebevorrichtung 13a, 13b).

Schließlich kann auch die energieabsorbierende Deformationsvorrichtung 52 auf der gemeinsamen Grundplatte 61 angeordnet sein, wodurch die Montage der Ladegut-Manipulationseinheit 11 noch weiter vereinfacht wird, insbesondere wenn die Grundplatte 61 wiederum Mittel zum Ausrichten der darauf angeordneten Deformationsvorrichtung 52 aufweist.

Die Fig. 13 zeigt nun eine Detailansicht des im Regallagersystem 1 eingesetzten Spannsystems 34 für das Zugmittel 33, und die Fig. 14 zeigt schließlich eine schematisierte Seitenansicht der Ladegut-Manipulationseinheit 11 mit Blick auf die energieabsorbierende Deformationsvorrichtung 52 und die Ladegut-Hebevorrichtung 13a mit dem an diesem geführten Zugmittel 33.

Der Zugmitteltrieb wird bevorzugt nach dem Befestigen des Vertikalmasts 15 an der Grundplatte 61 und/oder nach dem Befestigen des Vertikalmasts 15 am Lageregal 2a (2a, 2b) montiert. Dabei wird das Zugmittel 33 im gezeigten Beispiel um das Antriebsrad 35, das im Mastkopfbereich gelagerte, obere Umlenkrad 37, das Mastfußbereich gelagerte, untere Umlenkrad 36 und um das Führungsrad 38 geführt. Das Führungsrad 38 ist in diesem Beispiel im Bereich des Vertikalmastfußes zwischen dem unteren Umlenkrad 36 und dem Antriebsrad 35 angeordnet. Über das Spannsystem 34 können die Enden des Zugmittels 33 miteinander verbunden werden, wodurch ein endloses Zugmittel 33 entsteht. Darüber hinaus kann mit dem Spannsystem 34 eine Spannkraft (Vorspannung) im Zugmittel 33 eingestellt werden. Konkret erfolgt dies im gezeigten Beispiel über eine Spannschraube 62. Das Zugmittel 33 kann insbesondere als Zahnriemen und das Antriebsrad 35 als Zahnscheibe ausgebildet sein.

Durch die vorgeschlagenen Maßnahmen kann die Antriebskraft beziehungsweise die Antriebsleistung des Antriebsmotors 26a bei nur geringen bewegten Massen auf den Hubrahmen 20 übertragen werden. Auch kann der Antriebsmotor 26a fix in Bodennähe installiert werden und trägt nicht zu der bewegten Masse des Hubrahmens 20 bei. Insbesondere wenn der Vertikalmast 15 einen offenen Profilquerschnitt aufweist oder als Hohlprofil ausgebildet ist, kann ein erstes Trum an der Innenseite des Masts 15 und ein zweites Trum an der Außenseite des Masts 15 geführt werden.

Das Spannsystem 34 ist aufgrund der speziellen Anordnung gut von der Regalgasse 5 (wie in Fig. 13 schematisch durch den Doppelpfeil angedeutet) aus zugänglich, wodurch das Spannen des Zugmittels 33 bei der Herstellung des Regallagersystems 1 oder ein Nachspannen des Zugmittels 33 bei der Wartung des Regallagersystems 1 auf einfache Weise möglich ist.

In der Fig. 14 ist erkennbar, dass der Hubrahmen 20 über eine Klemme 63 an das Zugmittel 33 gekoppelt ist.

Die Klemme 63 teilt das Zugmittel 33 zudem in ein Lasttrum LA, welches den zwischen der Klemme 63 und dem Antriebsrad 35 liegenden und über das obere Umlenkrad 37 geführten Abschnitt des Zugmittels 33 bezeichnet, und in ein Leertrum LE, welches den übrigen zwischen der Klemme 63 und dem Antriebsrad 35 liegenden Abschnitt des Zugmittels 33 bezeichnet.

Im Lasttrum LA und im Leertrum LE herrscht im unbelasteten Zustand (das heißt ohne den Hubrahmen 20) die Vorspannung, die mit Hilfe des Spannsystems 34 auf das Zugmittel 33 aufgebracht wird. Ist der Hubrahmen 20 über die Klemme 63 an das Zugmittel 33 gekoppelt und angehoben, so herrscht im Lasttrum LA zusätzlich zu der besagten Vorspannung, die durch mit Hilfe des Spannsystems 34 auf das Zugmittel 33 aufgebracht wird, ein durch das Gewicht des Hubrahmens 20 und der darauf befindlichen Last (Ladegut / Ladegüter) beeinflusster Lastspannungsanteil. Durch diesen Lastspannungsanteil wird das Lasttrum LA gegenüber dem unbelasteten Zustand gedehnt. Diese Dehnung wird vom Leertrum LE aufgenommen, das nun gegenüber dem unbelasteten Zustand verkürzt wird. Dementsprechend wird die im Leertrum LE herrschende Spannung unter die Vorspannung im unbelasteten Zustand reduziert. Um ein Herausspringen des Zugmittels 33 aus dem unteren Umlenkrad 36 und/oder ein Durchrutschen des Zugmittels 33 über das Antriebsrad 35 im Bereich des Leertrums LE zu verhindern, sollte die Vorspannung im Leertrum LE auch in diesem Lastzustand nicht auf null sinken, da dieses ansonsten schlaff wird. Ein solcher Zustand muss im Besonderen auch dann verhindert werden, wenn der Hubrahmen 20 nach oben beschleunigt wird und das Lasttrum LA aufgrund des erhöhten Lastspannungsanteils noch stärker gedehnt wird.

Durch die Positionierung des Antriebsrads 35 in der Regalgasse 5 wird das Leertrum LE deutlich gegenüber einer Lösung verlängert, bei der das Antriebsrad 35 für das Zugmittel 33 im Mastfußbereich angeordnet ist (und dann an die Stelle des unteren Umlenkrads 36 tritt). In etwa kann die Länge des Leertrums LE gegenüber diesen bekannten Lösungen verdoppelt werden, wodurch das Leertrum LE die im Lasttrum LA bei Belastung und/oder Beschleunigung des Hubrahmens 20 auftretende Dehnung leichter aufnehmen kann. Die Vorspannung im Zugmittel 33 kann daher relativ niedrig gewählt werden, ohne ein Herausspringen des Zugmittels 33 aus dem unteren Umlenkrad 36 oder ein Durchrutschen des Zugmittels 33 über das Antriebsrad 35 befürchten zu müssen. Dementsprechend ist der nutzbare Lastspannungsanteil vergleichsweise hoch, und es sind nur relativ kleine Querschnitte für das Zugmittel 33 nötig, um die geforderten Lasten tragen und bewegen zu können. Durch das Vorsehen des Führungsrads 38 wird zudem der Umschlingungswinkel um das Antriebsrad 35 vergrößert, was den Hubantrieb 17 zusätzlich verbessert.

Vorzugsweise beträgt ein Mittenabstand 1 (insbesondere ein horizontaler Mittenabstand) zwischen dem Antriebsrad 35 und dem unteren Umlenkrad 36 zur Erreichung der oben gennannten Ziele mindestens 300 mm. Noch weiter bevorzugt liegt der Mittenabstand 1 zwischen 350 mm und 800 mm.

Abschließend sei noch auf mögliche unterschiedliche Ausbildungen der Ladegut-Manipulationseinheit 11 eingegangen.

Nach einer nicht gezeigten Ausführung umfasst die Ladegut-Manipulationseinheit 11 ausschließlich eine in der z-Richtung z seitlich zur Regalgasse 5 versetzte erste Puffervorrichtung 12a und ausschließlich eine, insbesondere im Randbereich der Regalgasse 5 angeordnete, erste Ladegut-Hebevorrichtung 13a zum Einlagern und/oder Auslagern von Ladegütern 4. Die (einzige) Ladegut-Hebevorrichtung 13a dient also dem Einlagern und Auslagern von Ladegütern 4.

Nach einer ersten Ausführung umfasst die (einzige) Puffervorrichtung 12a in zumindest einigen der Lagerebenen E1 Bereitstellvorrichtungen 14, die jeweils für das Zwischenpuffern eines Ladeguts 4 oder mehrerer Ladegüter 4 ausgebildet sind und in der x-Richtung x benachbart an einer der Seiten der ersten Ladegut-Hebevorrichtung 13a angeordnet sind. Optional können in allen Lagerebenen E1 Bereitstellvorrichtungen 14 vorgesehen werden. Einige der Bereitstellvorrichtungen 14 dienen dem Einlagern und einige der Bereitstellvorrichtungen 14 dienen dem Auslagern von Ladegütern 4, oder die Bereitstellvorrichtungen 14 können - in einem Reversierbetrieb - jeweils und je nach Bedarf dem Einlagern oder dem Auslagern von Ladegütern 4 dienen. Wie oben beschrieben sind die Bereitstellvorrichtungen entweder als passive Bereitstellvorrichtungen oder als aktive Bereitstellvorrichtungen gestaltet.

Nach einer zweiten Ausführung umfasst die (einzige) Puffervorrichtung 12a in zumindest einigen der Lagerebenen E1 Bereitstellvorrichtungen 14, die jeweils für das Zwischenpuffern eines Ladeguts 4 oder mehrerer Ladegüter 4 ausgebildet sind und in der x-Richtung x benachbart zu beiden Seiten der ersten Ladegut-Hebevorrichtung 13a angeordnet sind. Optional können in allen Lagerebenen E1 Bereitstellvorrichtungen 14 vorgesehen werden. Die Bereitstellvorrichtungen 14, welche in der x-Richtung x benachbart an der ersten Seite der ersten Ladegut-Hebevorrichtung 13a angeordnet sind, dienen dann ausschließlich dem Einlagern von Ladegütern 4, und die Bereitstellvorrichtungen 14, welche in der x-Richtung x benachbart an der zweiten Seite der ersten Ladegut-Hebevorrichtung 13a angeordnet sind, dienen dann ausschließlich dem Auslagern von Ladegütern 4. Wie oben beschrieben sind die Bereitstellvorrichtungen entweder als passive Bereitstellvorrichtungen oder aktive Bereitstellvorrichtungen gestaltet.

Unterschiedliche Ausführungen dieser Ladegut-Manipulationseinheit 11 sind beispielweise in der WO 2013/090970 A2, Fig. 1 und WO 2016/033628 A1, Fig. 8 beschrieben.

Es sei auch darauf hingewiesen, dass die in übereinander liegenden Lagerebenen E1 und in x-Richtung nebeneinander angeordneten Lagerplätze 3 entweder nur an einer der Seiten der ersten / zweiten Ladegut-Hebevorrichtung 13a, 13b angeordnet sind, wie in den Fig. 1 und 3 ersichtlich, oder die in übereinander liegenden Lagerebenen (E1) und in x-Richtung nebeneinander angeordneten Lagerplätze 3 sowohl an einer ersten Seite der ersten / zweiten Ladegut-Hebevorrichtung 13a, 13b als auch an einer zweiten Seite der ersten / zweiten Ladegut-Hebevorrichtung 13a, 13b angeordnet sind (wie beispielweise in der WO 2016/033628 A1, Fig. 1 dargestellt).

Ebenso sei darauf hingewiesen, dass die Ladegut-Hebevorrichtung 13a und gegebenenfalls die Ladegut-Hebevorrichtung 13b (sofern die Ladegut-Manipulationseinheit 11 eine erste Ladegut-Hebevorrichtung 13a und zweite Ladegut-Hebevorrichtung 13b umfasst) auch bloß den Hubrahmen 20 und die Transportvorrichtung 21 umfassen kann. In diesem Fall entfallen die Zusatz-Antriebsstation 28, der Zusatz-Zugmitteltrieb 29, der Zusatz-Hubrahmen 30 und die Zusatz-Transportvorrichtung 31.

Es wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

| | | | |
|---|---|---|---|
| 1 | Regallagersystem | 37 | oberes Umlenkrad |
| 2a, 2b | Lagerregal | 38 | Führungsrad |
| 3 | Lagerplatz | 39 | Verbindungsstrebe |
| 4 | Ladegut | 40 | Profilbasis |
| 5 | Regalgasse | | |
| | | 41 | Profilschenkel |
| 6a, 6b | vorderer Regalsteher | 42 | Montageschenkel |
| 7a, 7b | hinterer Regalsteher | 43a, 43b | Montagetraverse |
| 8a, 8b | vordere Längstraverse | 44 | Befestigungselement |
| 9a, 9b | hintere Längstraverse | 45 | Montageabschnitt |
| 10a, 10b | Regalboden | | |
| | | 46a..46c | Verbindungsmittel |
| 11 | Ladegut-Manipulationseinheit | 47 | Futterplatte |
| | | 48a, 48b | Führungsleiste |
| 12a, 12b | Puffervorrichtung | 49 | Mastsegment |
| 13a, 13b | Ladegut-Hebevorrichtung | 50 | Stoßverbindungen |
| 14 | Bereitstellvorrichtung | | |
| 15 | Vertikalmast | 51a, 51b | Verbindungsplatte |
| | | 52 | energieabsorbierende Deformationsvorrichtung |
| 16 | Hubführung | | |
| 17 | Hubantrieb | 53 | Sicherheitsbremse |
| 18 | Antriebsstation | 54 | Kraftverteilplatte |
| 19 | Zugmitteltrieb | 55 | Wabenkörper |
| 20 | Hubrahmen | | |
| | | 56 | Montageplatte |
| 21 | Transportvorrichtung | 57 | Beschleunigungssensor (im Gehäuse einer Steuerung) |
| 22a, 22b | Führungsbahn | | |
| 23 | Regalbediengerät | 58 | Messsensor |
| 24 | Lastaufnahmevorrichtung | 59 | Datenlichtschranke |
| 25a, 25b | Fördertechnik | 60 | Führungsrolle |
| 26a, 26b | Antriebsmotor | 61 | Grundplatte |
| 27 | Zusatz-Hubantrieb | 62 | Spannschraube |
| 28 | Zusatz-Antriebsstation | 63 | Klemme |
| 29 | Zusatz-Zugmitteltrieb | | |
| 30 | Zusatz-Hubrahmen | A | Antriebsachse |
| | | b | Regalabstand / Gassenbreite |
| 31 | Zusatz-Transportvorrich- | | |

(fortgesetzt)

| | | | |
|---|---|---|---|
| | tung | E1 | Lagerebene |
| 32 | Gehsteg | E2 | Fahrebene |
| 33 | Zugmittel | E3 | Wartungsebene |
| 34 | Spannsystem | | |
| 35 | Antriebsrad | 1 | Mittenabstand Antriebsrad / unteres Umlenkrad |
| 36 | unteres Umlenkrad | LA | Lasttrum des Zugmittels |
| LE | Leertrum des Zugmittels | | |
| x | x-Richtung | | |
| y | y-Richtung | | |
| z | z-Richtung | | |

## Patentansprüche

1. Regallagersystem (1), umfassend

- ein erstes Lagerregal (2a) mit Lagerplätzen (3) für Ladegüter (4), die in übereinander liegenden Lagerebenen (E1) nebeneinander angeordnet sind,
- ein zweites Lagerregal (2b) mit Lagerplätzen (3) für Ladegüter (4), die in übereinander liegenden Lagerebenen (E1) nebeneinander angeordnet sind,
- wobei das erste Lagerregal (2a) und das zweite Lagerregal (2b) in einer horizontalen z-Richtung (z) in einem Abstand (b) einander gegenüberstehen und eine Regalgasse (5) zwischen dem ersten Lagerregal (2a) und dem zweiten Lagerregal (2b) ausgebildet wird, welche eine horizontal in einer x-Richtung (x) verlaufende Längsachse aufweist, die rechtwinkelig zur z-Richtung (z) ausgerichtet ist,
- wobei das erste Lagerregal (2a) vordere Regalsteher (6a), hintere Regalsteher (7a), je Lagerebene (E1) in der x-Richtung (x) verlaufende und mit den vorderen Regalstehern (6a) verbundene vordere Längstraversen (8a), je Lagerebene (E1) in der x-Richtung (x) verlaufende und mit den hinteren Regalstehern (7a) verbundene hintere Längstraversen (9a), und einen je Lagerebene (E1) zwischen der vorderen Längstraverse (8a) und der hinteren Längstraverse (9a) angeordneten Regalboden (10a) mit den Lagerplätzen (3) aufweist,
- wobei das zweite Lagerregal (2b) vordere Regalsteher (6b), hintere Regalsteher (7b), je Lagerebene (E1) in der x-Richtung (x) verlaufende und mit den vorderen Regalstehern (6b) verbundene vordere Längstraversen (8b), je Lagerebene (E1) in der x-Richtung (x) verlaufende und mit den hinteren Regalstehern (7b) verbundene hintere Längstraversen (9b), und einen je Lagerebene (E1) zwischen der vorderen Längstraverse (8b) und der hinteren Längstraverse (9b) angeordneten Regalboden (10b) mit den Lagerplätzen (3) aufweist,
- eine Ladegut-Manipulationseinheit (11), welche eine in der z-Richtung seitlich zur Regalgasse (5) versetzte erste Puffervorrichtung (12a) umfasst und eine im Randbereich der Regalgasse (5) angeordnete, erste Ladegut-Hebevorrichtung (13a) zum Einlagern und/oder Auslagern von Ladegütern (4) umfasst,

- wobei die erste Puffervorrichtung (12a) in zumindest einigen der Lagerebenen (E1) Bereitstellvorrichtungen (14) aufweist, die jeweils für das Zwischenpuffern eines Ladeguts (4) oder mehrerer Ladegüter (4) ausgebildet sind und in der x-Richtung benachbart an einer der Seiten der ersten Ladegut-Hebevorrichtung (13a) oder in der x-Richtung benachbart zu beiden Seiten der ersten Ladegut-Hebevorrichtung (13a) angeordnet sind, und
- wobei die erste Ladegut-Hebevorrichtung (13a) zum Einlagern und/oder Auslagern von Ladegütern (4) umfasst

- einen in einem Randbereich der Regalgasse (5) angeordneten, ortsfest aufgestellten und am ersten Lagerregal (2a) befestigten, ersten Vertikalmast (15) mit einer ersten Hubführung (16),
- einen ersten Hubantrieb (17) mit einer ersten Antriebsstation (18) und einem Zugmitteltrieb (19), wobei die erste Antriebsstation (18) auf einer der Regalgasse (5) zugewandten Seite des Vertikalmasts (15) angeordnet ist und einen ersten Antriebsmotor (26a) umfasst, welcher innerhalb der Regalgasse (5) angeordnet ist,
- einen an der ersten Hubführung (16) gelagerten und durch den ersten Hubantrieb (17) vertikal bewegbaren ersten Hubrahmen (20), welcher mit dem Zugmitteltrieb (19) des ersten Hubantriebs (17) verbunden ist, und

- eine am ersten Hubrahmen (20) angeordnete erste Transportvorrichtung (21), welche zumindest zum Transport der Ladegüter (4) zwischen einer der Bereitstellvorrichtungen (14) und der ersten Transportvorrichtung (21) in der x-Richtung (x) ausgebildet ist, wobei der erste Hubrahmen (20) mit der ersten Transportvorrichtung (21) auf einer der Regalgasse (5) abgewandten Seite des Vertikalmasts (15) angeordnet ist,

- Führungsbahnen (22a, 22b), welche in übereinander liegenden, horizontalen Fahrebenen (E2) jeweils paarweise an den vorderen Längstraversen (8a) des ersten Lagerregals (2a) und an den vorderen Längstraversen (8b) des zweiten Lagerregals (2b) angeordnet sind, und in x-Richtung entlang dem ersten Lagerregal (2a), dem zweiten Lagerregal (2b) und der Bereitstellvorrichtungen (14) verlaufen,
- zumindest ein automatisiertes Regalbediengerät (23) mit zumindest einer Lastaufnahmevorrichtung (24) zum Transport der Ladegüter (4) zwischen den Lagerplätzen (3) und den Bereitstellvorrichtungen (14), das auf einer Fahrebene (E2) vor den Lagerplätzen (3) und vor der Bereitstellvorrichtung (14) entlang der Führungsbahnen (22a, 22b) in der x-Richtung verfahrbar ist, und
- eine an die Ladegut-Manipulationseinheit (11) angeschlossene erste Fördertechnik (25a) zum Antransport von Ladegütern (4) zur ersten Ladegut-Hebevorrichtung (13a) und/oder zum Abtransport von Ladegütern (4) von der ersten Ladegut-Hebevorrichtung (13a), wobei die erste Ladegut-Hebevorrichtung (13a) die erste Fördertechnik (25a) und die Bereitstellvorrichtungen (14) fördertechnisch verbindet,
**dadurch gekennzeichnet, dass**
die erste Ladegut-Hebevorrichtung (13a) zum Einlagern und/oder Auslagern von Ladegütern (4) ferner umfasst
- einen ersten Zusatz-Hubantrieb (27) mit einer ersten Zusatz-Antriebsstation (28) und einem daran gekoppelten ersten Zusatz-Zugmitteltrieb (29),
- einen am ersten Vertikalmast (15) entlang der ersten Hubführung (16) oder entlang einer ersten Zusatz-Hubführung verschiebbar gelagerten ersten Zusatz-Hubrahmen (30), welcher mit Hilfe des ersten Zusatz-Hubantriebs (27) vertikal bewegbar ist, und
- eine am ersten Zusatz-Hubrahmen (30) angeordnete erste Zusatz-Transportvorrichtung (31), welche zumindest zum Transport der Ladegüter (4) zwischen einer Bereitstellvorrichtung (14) und der ersten Zusatz-Transportvorrichtung (31) in der x-Richtung (x) ausgebildet ist.

2. Regallagersystem (1), umfassend

- ein erstes Lagerregal (2a) mit Lagerplätzen (3) für Ladegüter (4), die in übereinander liegenden Lagerebenen (E1) nebeneinander angeordnet sind,
- ein zweites Lagerregal (2b) mit Lagerplätzen (3) für Ladegüter (4), die in übereinander liegenden Lagerebenen (E1) nebeneinander angeordnet sind,
- wobei das erste Lagerregal (2a) und das zweite Lagerregal (2b) in einer horizontalen z-Richtung (z) in einem Abstand (b) einander gegenüberstehen und eine Regalgasse (5) zwischen dem ersten Lagerregal (2a) und dem zweiten Lagerregal (2b) ausgebildet wird, welche eine horizontal in einer x-Richtung (x) verlaufende Längsachse aufweist, die rechtwinkelig zur z-Richtung (z) ausgerichtet ist,
- wobei das erste Lagerregal (2a) vordere Regalsteher (6a), hintere Regalsteher (7a), je Lagerebene (E1) in der x-Richtung (x) verlaufende und mit den vorderen Regalstehern (6a) verbundene vordere Längstraversen (8a), je Lagerebene (E1) in der x-Richtung (x) verlaufende und mit den hinteren Regalstehern (7a) verbundene hintere Längstraversen (9a), und einen je Lagerebene (E1) zwischen der vorderen Längstraverse (8a) und der hinteren Längstraverse (9a) angeordneten Regalboden (10a) mit den Lagerplätzen (3) aufweist,
- wobei das zweite Lagerregal (2b) vordere Regalsteher (6b), hintere Regalsteher (7b), je Lagerebene (E1) in der x-Richtung (x) verlaufende und mit den vorderen Regalstehern (6b) verbundene vordere Längstraversen (8b), je Lagerebene (E1) in der x-Richtung (x) verlaufende und mit den hinteren Regalstehern (7b) verbundene hintere Längstraversen (9b), und einen je Lagerebene (E1) zwischen der vorderen Längstraverse (8b) und der hinteren Längstraverse (9b) angeordneten Regalboden (10b) mit den Lagerplätzen (3) aufweist,
- eine Ladegut-Manipulationseinheit (11), welche eine in der z-Richtung seitlich zur Regalgasse (5) versetzte erste Puffervorrichtung (12a) umfasst und eine erste Ladegut-Hebevorrichtung (13a) zum Einlagern und/oder Auslagern von Ladegütern (4) umfasst,

- wobei die erste Puffervorrichtung (12a) in zumindest einigen der Lagerebenen (E1) Bereitstellvorrichtungen (14) aufweist, die jeweils für das Zwischenpuffern eines Ladeguts (4) oder mehrerer Ladegüter (4) ausgebildet sind und in der x-Richtung benachbart an einer der Seiten der ersten Ladegut-Hebevorrichtung (13a) oder in der x-Richtung benachbart zu beiden Seiten der ersten Ladegut-Hebevorrichtung (13a) angeordnet sind, und

- wobei die erste Ladegut-Hebevorrichtung (13a) zum Einlagern und/oder Auslagern von Ladegütern (4) umfasst

- einen ortsfest aufgestellten ersten Vertikalmast (15) mit einer ersten Hubführung (16), welcher einen offenen Profilquerschnitt aufweist, wobei der Profilquerschnitt eine Profilbasis (40), von dieser vorragende Profilschenkel (41) und an den freien Enden der Profilschenkel (41) abgewinkelte Montageschenkel (42) umfasst, an denen der Vertikalmast (15) am ersten Lagerregal (2a) befestigt ist,
- einen ersten Hubantrieb (17) mit einer ersten Antriebsstation (18) und einem Zugmitteltrieb (19),
- einen an der ersten Hubführung (16) gelagerten und durch den ersten Hubantrieb (17) vertikal bewegbaren ersten Hubrahmen (20), welcher mit dem Zugmitteltrieb (19) des ersten Hubantriebs (17) verbunden ist, und
- eine am ersten Hubrahmen (20) angeordnete erste Transportvorrichtung (21), welche zumindest zum Transport der Ladegüter (4) zwischen einer der Bereitstellvorrichtungen (14) und der ersten Transportvorrichtung (21) in der x-Richtung (x) ausgebildet ist,

- Führungsbahnen (22a, 22b), welche in übereinander liegenden, horizontalen Fahrebenen (E2) jeweils paarweise an den vorderen Längstraversen (8a) des ersten Lagerregals (2a) und an den vorderen Längstraversen (8b) des zweiten Lagerregals (2b) angeordnet sind, und in x-Richtung entlang dem ersten Lagerregal (2a), dem zweiten Lagerregal (2b) und der Bereitstellvorrichtungen (14) verlaufen,
- zumindest ein automatisiertes Regalbediengerät (23) mit zumindest einer Lastaufnahmevorrichtung (24) zum Transport der Ladegüter (4) zwischen den Lagerplätzen (3) und den Bereitstellvorrichtungen (14), das auf einer Fahrebene (E2) vor den Lagerplätzen (3) und vor der Bereitstellvorrichtung (14) entlang der Führungsbahnen (22a, 22b) in der x-Richtung verfahrbar ist, und
- eine an die Ladegut-Manipulationseinheit (11) angeschlossene erste Fördertechnik (25a) zum Antransport von Ladegütern (4) zur ersten Ladegut-Hebevorrichtung (13a) und/oder zum Abtransport von Ladegütern (4) von der ersten Ladegut-Hebevorrichtung (13a), wobei die erste Ladegut-Hebevorrichtung (13a) die erste Fördertechnik (25a) und die Bereitstellvorrichtungen (14) fördertechnisch verbindet,

**dadurch gekennzeichnet, dass**
die erste Ladegut-Hebevorrichtung (13a) zum Einlagern und/oder Auslagern von Ladegütern (4) ferner umfasst
- einen ersten Zusatz-Hubantrieb (27) mit einer ersten Zusatz-Antriebsstation (28) und einem daran gekoppelten ersten Zusatz-Zugmitteltrieb (29),
- einen am ersten Vertikalmast (15) entlang der ersten Hubführung (16) oder entlang einer ersten Zusatz-Hubführung verschiebbar gelagerten ersten Zusatz-Hubrahmen (30), welcher mit Hilfe des ersten Zusatz-Hubantriebs (27) vertikal bewegbar ist, und
- eine am ersten Zusatz-Hubrahmen (30) angeordnete erste Zusatz-Transportvorrichtung (31), welche zumindest zum Transport der Ladegüter (4) zwischen einer Bereitstellvorrichtung (14) und der ersten Zusatz-Transportvorrichtung (31) in der x-Richtung (x) ausgebildet ist.

3. Regallagersystem (1) nach Anspruch 1 oder 2, **dadurch gekennzeichnet, dass** eine Antriebsachse (A) des ersten Antriebsmotors (26a) in der x-Richtung (x) ausgerichtet ist.

4. Regallagersystem (1) nach Anspruch 1 oder 2, **dadurch gekennzeichnet, dass** eine Antriebsachse (A) des ersten Antriebsmotors (26a) vertikal ausgerichtet ist.

5. Regallagersystem (1) nach Anspruch 1, **dadurch gekennzeichnet, dass** der Vertikalmast (15) einen offenen Profilquerschnitt aufweist, wobei der Profilquerschnitt eine Profilbasis (40), von dieser vorragende Profilschenkel (41) und an den freien Enden der Profilschenkel (41) abgewinkelte Montageschenkel (42) umfasst, an denen der Vertikalmast (15) am ersten Lagerregal (2a) befestigt ist.

6. Regallagersystem (1) nach Anspruch 1 oder 2, **dadurch gekennzeichnet, dass**

- das erste Lagerregal (2a) Montagetraversen (43a) umfasst, welche zusätzlich zu den vorderen Längstraversen (8a) an den vorderen Regalstehern (6a) befestigt sind und parallel zu den vorderen Längstraversen (8a) verlaufen, und
- der Vertikalmast (15) einen der Regalgasse (5) zugewandten Montageabschnitt (45) umfasst, mit dem die erste Ladegut-Hebevorrichtung (13a) an den Montagetraversen (43a) gelagert ist.

7. Regallagersystem (1) nach Anspruch 6, **dadurch gekennzeichnet, dass**

- das zweite Lagerregal (2b) Montagetraversen (43b) umfasst, welche zusätzlich zu den vorderen Längstraversen (8b) an den vorderen Regalstehern (6b) befestigt sind und parallel zu den vorderen Längstraversen (8b) verlaufen.

8. Regallagersystem (1) nach Anspruch 7, **gekennzeichnet durch** Gehstege (32), welche in der Regalgasse (5) in übereinander liegenden Wartungsebenen (E3) angeordnet und an den Montagetraversen (43a) des ersten Lagerregals (2a) und an den Montagetraversen (43b) des zweiten Lagerregals (2b) befestigt sind.

9. Regallagersystem (1) nach einem der Ansprüche 6 bis 8, **dadurch gekennzeichnet, dass** die Verbindung zwischen dem Vertikalmast (15) und einer der Montagetraversen (43a) durch ein gewinkeltes oder gekröpftes Befestigungselement (44) hergestellt ist.

10. Regallagersystem (1) nach Anspruch 9, **dadurch gekennzeichnet, dass** das gewinkelte oder gekröpfte Befestigungselement (44) und/oder eine zwischen dem Vertikalmast (15) und einer der Montagetraversen (43a) angeordnete Futterplatte (47) aus einem Material mit einem Elastizitätsmodul von weniger als 40.000 MPa gefertigt ist.

11. Regallagersystem (1) nach einem der Ansprüche 1 bis 10, **dadurch gekennzeichnet, dass** der Vertikalmast (15) eine Vielzahl von Mastsegmenten (49) aufweist, die im Wesentlichen spaltfrei vertikal übereinander zusammengefügt sind.

12. Regallagersystem (1) nach einem der Ansprüche 1 bis 11, **dadurch gekennzeichnet, dass** die erste Hubführung (16) zur Führung des ersten Hubrahmens (20) in vertikaler Richtung durch formkomplementäre Stoßverbindungen (50) unterteilt ist.

13. Regallagersystem (1) nach den Ansprüchen 11 und 12, **dadurch gekennzeichnet, dass** eine Teilung zwischen den Mastsegmenten (49) in vertikaler Richtung versetzt zu den Stoßverbindungen (50) der Hubführung (16) angeordnet ist.

14. Regallagersystem (1) nach einem der Ansprüche 1 bis 13, **dadurch gekennzeichnet, dass** die erste Hubführung (16) zur Führung des ersten Hubrahmens (20) eine erste Führungsleiste (48a) und eine zweite Führungsleiste (48b) umfasst, welche voneinander getrennt und parallel in Längsrichtung des Vertikalmasts (15) verlaufen und über Verbindungsmittel (46c) bevorzugt lösbar mit dem Vertikalmast (15) verbunden sind.

15. Regallagersystem (1) nach einem der Ansprüche 1 bis 14, **dadurch gekennzeichnet, dass** der Vertikalmast (15) und die erste Hubführung (16) sowie die vorderen Regalsteher (6a) und hinteren Regalsteher (7a) des ersten Lagerregals (2a) aus demselben Material hergestellt sind.

16. Regallagersystem (1) nach Anspruch 1 oder 2, **dadurch gekennzeichnet, dass** die Ladegut-Manipulationseinheit (11) eine energieabsorbierende Deformationsvorrichtung (52) umfasst, welche unterhalb des ersten Hubrahmens (20) fix montiert ist.

17. Regallagersystem (1) nach Anspruch 16, **dadurch gekennzeichnet, dass** die energieabsorbierende Deformationsvorrichtung (52)

- eine Kraftverteilplatte (54) mit einer Aufprallfläche für den ersten Hubrahmen (20) umfasst,
- unterhalb der Kraftverteilplatte (54) einen durch Krafteinwirkung plastisch deformierbaren Wabenkörper (55) umfasst, welcher eine bei Kollision des ersten Hubrahmens (20) mit der Kraftverteilplatte (54) entstehende Aufprallenergie zumindest zum Teil absorbiert, und
- unterhalb des Wabenkörper (55) eine Montageplatte (56) zur Montage der Deformationsvorrichtung (52) umfasst.

18. Regallagersystem (1) nach Anspruch 16 oder 17, **dadurch gekennzeichnet, dass** Hohlräume des Wabenkörpers (55) in vertikaler Richtung verlaufen.

19. Regallagersystem (1) nach Anspruch 1 oder 2, **dadurch gekennzeichnet, dass** der erste Hubantrieb (17) und der erste Vertikalmast (15) auf einer gemeinsamen Grundplatte (61) angeordnet sind.

20. Regallagersystem (1) nach einem der Ansprüche 16 bis 19, **dadurch gekennzeichnet, dass** der erste Hubantrieb (17) und die energieabsorbierende Deformationsvorrichtung (52) auf einer gemeinsamen Grundplatte (61) angeordnet sind.

21. Regallagersystem (1) nach Anspruch 1 oder 2, **dadurch gekennzeichnet, dass** die Antriebsstation (18) des ersten Hubantriebs (17) und die Zusatz-Antriebsstation (28) des ersten Zusatz-Hubantriebs (27) auf einer gemeinsamen Grundplatte (61) angeordnet sind.

22. Regallagersystem (1) nach einem der Ansprüche 1 bis 21, **dadurch gekennzeichnet, dass**

   - am ersten Hubrahmen (20) ein Beschleunigungssensor (57) zur Detektion von zumindest einer Beschleunigung in vertikaler Richtung angeordnet ist und/oder
   - die erste Ladegut-Hebevorrichtung (13a) einen optischen Entfernungs-Messsensor (58) zur Detektion der Vertikalposition des ersten Hubrahmens (20) und/oder Mittel (59) zur optischen Datenübertragung zum oder vom ersten Hubrahmen (20) umfasst.

23. Regallagersystem (1) nach einem der Ansprüche 1 bis 22 **dadurch gekennzeichnet, dass**

   - der erste Zugmitteltrieb (19) der ersten Ladegut-Hebevorrichtung (13a) ein Zugmittel (33) umfasst und
   - die erste Ladegut-Hebevorrichtung (13a) ein Spannsystem (34) zur Montage des Zugmittels (33) und/oder zur Einstellung einer Vorspannkraft im Zugmittel (33) aufweist, welches auf der der Regalgasse (5) zugewandten Seite des Vertikalmasts (15) angeordnet ist.

24. Regallagersystem (1) nach einem der Ansprüche 1 bis 23, **dadurch gekennzeichnet, dass**

   - die Ladegut-Manipulationseinheit (11) eine zweite Puffervorrichtung (12b) aufweist, die wie die erste Puffervorrichtung (12a) ausgebildet ist, und eine zweite Ladegut-Hebevorrichtung (13b) aufweist, die wie die erste Ladegut-Hebevorrichtung (13a) ausgebildet ist, und
   - das Regallagersystem (1) eine an die Ladegut-Manipulationseinheit (11) angeschlossene zweite Fördertechnik (25b) zum Antransport von Ladegütern (4) zur zweiten Ladegut-Hebevorrichtung (13b) und/oder zum Abtransport von Ladegütern (4) von der zweiten Ladegut-Hebevorrichtung (13b) aufweist.

25. Regallagersystem (1) nach einem der Ansprüche 1 bis 24, **dadurch gekennzeichnet, dass**

   - der Zugmitteltrieb (19) ein Antriebsrad (35), ein unteres Umlenkrad (36), ein oberes Umlenkrad (37), ein Führungsrad (38) und ein um das Antriebsrad (35), das untere Umlenkrad (36), das obere Umlenkrad (37) und das Führungsrad (38) geführtes Zugmittel (33) umfasst, wobei
   - das untere Umlenkrad (36) im Bereich eines Vertikalmastfußes des Vertikalmasts (15) und das obere Umlenkrad (37) im Bereich eines Vertikalmastkopfes des Vertikalmasts (15) angeordnet sind,
   - das Führungsrad (38) im Bereich des Vertikalmastfußes zwischen dem unteren Umlenkrad (36) und dem Antriebsrad (35) angeordnet ist,
   - das Antriebsrad (35) mit einem Abstand zum Vertikalmast (15) im Bereich des Vertikalmastfußes angeordnet ist, und
   - ein Mittenabstand (l) zwischen dem Antriebsrad (35) und dem unteren Umlenkrad (36) mindestens 300 mm beträgt.

**Claims**

1. A rack storage system (1), comprising

   - a first storage rack (2a) having storage locations (3) for loading goods (4) which are arranged next to one another on storage levels (E1) located on top of one another,
   - a second storage rack (2b) having storage locations (3) for loading goods (4) which are arranged next to one another on storage levels (E1) located on top of one another,
   - wherein the first storage rack (2a) and the second storage rack (2b) face each other at a distance (b) in a horizontal z direction (z), and a rack aisle (5) between the first storage rack (2a) and the second storage rack (2b) which has a longitudinal axis extending horizontally in an x direction (x) which is aligned orthogonally to the z direction (z),

- wherein the first storage rack (2a) has front uprights (6a), rear uprights (7a), front longitudinal beams (8a) per storage level (E1) which extend in the x direction (x) and are connected to the front uprights (6a), rear longitudinal beams (9a) per storage level (E1) which extend in the x direction (x) and are connected to the rear uprights (7a), and a shelf (10a) having the storage locations (3) per storage level (E1) which is arranged between the front longitudinal beam (8a) and the rear longitudinal beam (9a),
- wherein the second storage rack (2b) has uprights (6b), rear uprights (7b), front longitudinal beams (8b) per storage level (E1) extending in the x direction (x) and connected to the front uprights (6b), rear longitudinal beams (9b) per storage level (E1) extending in the x direction (x) and connected to the rear uprights (7b), and a shelf (10b) having the storage locations (3) per storage level (E1) which is arranged between the front longitudinal beam (8b) and the rear longitudinal beam (9b),
- a loading good manipulation unit (11) which comprises a first buffer device (12a) offset laterally to the rack aisle (5) in the z direction, and a first loading good lifting device (13a) for storing and/or retrieving loading goods (4) arranged in the periphery of the rack aisle (5),

    - wherein the first buffer device (12a) has provisioning devices (14) on at least some of the storage levels (E1), which provisioning devices (14) are respectively configured for buffering a loading good (4) or multiple loading goods (4) and are arranged adjacent in the x direction on one of the sides of the first loading good lifting device (13a), or adjacent in the x direction at both sides of first loading good lifting device (13a), and
    - wherein the first loading good lifting device (13a) for storing and/or retrieving loading goods (4) comprises
    - a first vertical mast (15) having a first lifting guide (16) and being arranged in a periphery of the rack aisle (5), installed in a stationary manner, and affixed to the first storage rack (2a),

        - a first lifting drive (17) having a first drive station (18) and a traction means drive (19), wherein the first drive station (18) is arranged on a side of the vertical mast (15) facing the rack aisle (5), and comprises a first drive motor (26a), which is arranged within the rack aisle (5),
        - a first lifting frame (20) supported on the first lifting guide (16) and vertically movable using the first lifting drive (17), which first lifting frame (20) is connected to the traction means drive (19) of the first lifting drive (17), and
        - a first transport device (21) arranged on the first lifting frame (20), which first transport device (21) is configured at least for transporting the loading goods (4) between one of the provisioning devices (14) and the first transport device (21) in the x direction (x), wherein the first lifting frame (20) with the first transport device (21) is arranged on a side of the vertical mast (15) facing away from the rack aisle (5),

- guide tracks (22a, 22b) which are arranged respectively in pairs on the front longitudinal beams (8a) of the first storage rack (2a) and on the front longitudinal beams (8b) of the second storage rack (2b) in horizontal travel planes (E2) located on top of one another and which extend in an x direction along the first storage rack (2a), the second storage rack (2b) and the provisioning devices (14),

    - at least one automated storage and retrieval unit (23) having at least one load handling device (24) for transporting the loading goods (4) between the storage locations (3) and the provisioning devices (14), which is displaceable in the x direction along the guide tracks (22a, 22b) on a travel plane (E2) in front of the storage locations (3) and in front of the provisioning device (14), and
    - a first conveying system (25a) for transporting loading goods (4) to the first loading good lifting device (13a) and/or for transporting loading goods (4) from the first loading good lifting device (13a), which first conveying system (25a) is adjoined to the loading good manipulation unit (11), wherein the first loading good lifting device (13a) connects the first conveying system (25a) and the provisioning devices (14) in terms of conveyance,
**characterized in that**
the first loading good lifting device (13a) for storing and/or retrieving loading goods (4) further comprises
- a first additional lifting drive (27) having a first additional drive station (28) and a first additional traction means drive (29) coupled thereto,
- a first additional lifting frame (30) supported on the first vertical mast (15) so as to be displaceable along the first lifting guide (16), or along a first additional lifting guide, which is vertically movable using the first additional lifting drive (27), and
- a first additional transport device (31) arranged on the first additional lifting frame (30) which is configured at least for transporting the loading goods (4) between a provisioning device (14) and the first additional transport device (31) in the x direction (x).

2. A rack storage system (1), comprising

- a first storage rack (2a) having storage locations (3) for loading goods (4) which are arranged next to one another on storage levels (E1) located on top of one another,
- a second storage rack (2b) having storage locations (3) for loading goods (4) which are arranged next to one another on storage levels (E1) located on top of one another,
- wherein the first storage rack (2a) and the second storage rack (2b) face each other at a distance (b) in a horizontal z direction (z), and a rack aisle (5) between the first storage rack (2a) and the second storage rack (2b) which has a longitudinal axis extending horizontally in an x direction (x) which is aligned orthogonally to the z direction (z),
- wherein the first storage rack (2a) has front uprights (6a), rear uprights (7a), front longitudinal beams (8a) per storage level (E1) which extend in the x direction (x) and are connected to the front uprights (6a), rear longitudinal beams (9a) per storage level (E1) which extend in the x direction (x) and are connected to the rear uprights (7a), and a shelf (10a) having the storage locations (3) per storage level (E1) which is arranged between the front longitudinal beam (8a) and the rear longitudinal beam (9a),
- wherein the second storage rack (2b) has front uprights (6b), rear uprights (7b), front longitudinal beams (8b) per storage level (E1) extending in the x direction (x) and connected to the front uprights (6b), rear longitudinal beams (9b) per storage level (E1) extending in the x direction (x) and connected to the rear uprights (7b), and a shelf (10b) having the storage locations (3) per storage level (E1) which is arranged between the front longitudinal beam (8b) and the rear longitudinal beam (9b),
- a loading good manipulation unit (11) which comprises a first buffer device (12a) offset laterally to the rack aisle (5) in the z direction, and a first loading good lifting device (13a) for storing and/or retrieving loading goods (4),

- wherein the first buffer device (12a) has provisioning devices (14) on at least some of the storage levels (E1), which provisioning devices (14) are respectively configured for buffering a loading good (4) or multiple loading goods (4) and are arranged adjacent in the x direction on one of the sides of the first loading good lifting device (13a), or adjacent in the x direction at both sides of first loading good lifting device (13a), and
- wherein the first loading good lifting device (13a) for storing and/or retrieving loading goods (4) comprises
- a stationarily installed first vertical mast (15) having a first lifting guide (16), which vertical mast (15) has an open profile cross section, wherein the profile cross section comprises a profile base (40), profile legs (41) protruding from same and mounting legs (42) angled from the free ends of the profile legs (41) on which the vertical mast (15) is affixed to the first storage rack (2a),

- a first lifting drive (17) having a first drive station (18) and a traction means drive (19),
- a first lifting frame (20) supported on the first lifting guide (16) and vertically movable using the first lifting drive (17), which first lifting frame (20) is connected to the traction means drive (19) of the first lifting drive (17), and
- a first transport device (21) arranged on the first lifting frame (20), which first transport device (21) is configured at least for transporting the loading goods (4) between one of the provisioning devices (14) and the first transport device (21) in the x direction (x),

- guide tracks (22a, 22b) which are arranged respectively in pairs on the front longitudinal beams (8a) of the first storage rack (2a) and on the front longitudinal beams (8b) of the second storage rack (2b) in horizontal travel planes (E2) located on top of one another and which extend in an x direction along the first storage rack (2a), the second storage rack (2b) and the provisioning devices (14),

- at least one automated storage and retrieval unit (23) having at least one load handling device (24) for transporting the loading goods (4) between the storage locations (3) and the provisioning devices (14), which is displaceable in the x direction along the guide tracks (22a, 22b) on a travel plane (E2) in front of the storage locations (3) and in front of the provisioning device (14), and
- a first conveying system (25a) for transporting loading goods (4) to the first loading good lifting device (13a) and/or for transporting loading goods (4) from the first loading good lifting device (13a), which first conveying system (25a) is adjoined to the loading good manipulation unit (11), wherein the first loading good lifting device (13a) connects the first conveying system (25a) and the provisioning devices (14) in terms of conveyance,
**characterized in that**
the first loading good lifting device (13a) for storing and/or retrieving loading goods (4) further comprises
- a first additional lifting drive (27) having a first additional drive station (28) and a first additional traction means drive (29) coupled thereto,
- a first additional lifting frame (30) supported on the first vertical mast (15) so as to be displaceable along the first lifting guide (16), or along a first additional lifting guide, which is vertically movable using the first additional lifting drive (27), and
- a first additional transport device (31) arranged on the first additional lifting frame (30) which is configured at least for transporting the loading goods (4) between a provisioning device (14) and the first additional transport device (31) in the x direction (x).

3. The rack storage system (1) according to claim 1 or 2, **characterized in that** a drive axle (A) of the first drive motor (26a) is aligned in the x direction (x).

4. The rack storage system (1) according to claim 1 or 2, **characterized in that** a drive axle (A) of the first drive motor (26a) is aligned vertically.

5. The rack storage system (1) according to claim 1, **characterized in that** the vertical mast (15) has an open profile cross section, wherein the profile cross section comprises a profile base (40), profile legs (41) protruding from same and mounting legs (42) angled from the free ends of the profile legs (41) on which the vertical mast (15) is affixed to the first storage rack (2a).

6. The rack storage system (1) according to claim 1 or 2, **characterized in that**

- the first storage rack (2a) comprises mounting beams (43a) which are affixed to the front uprights (6a) in addition to the front longitudinal beams (8a) and extend parallel to the front longitudinal beams (8a), and
- the vertical mast (15) comprises a mounting section (45) facing the rack aisle (5) using which the first loading good lifting device (13a) is mounted on the mounting beams (43a).

7. The rack storage system (1) according to claim 6, **characterized in that**

- the second storage rack (2b) comprises mounting beams (43b) which are affixed to the front uprights (6b) in addition to the front longitudinal beams (8b) and extend parallel to the front longitudinal beams (8b).

8. The rack storage system (1) according to claim 7, **characterized by** walkways (32) which are arranged in the rack aisle (5) on maintenance levels (E3) located on top of one another and are affixed to the mounting beams (43a) of the first storage rack (2a) and to the mounting beams (43b) of the second storage rack (2b).

9. The rack storage system (1) according to any one of the claims 6 to 8, **characterized in that** the connection between the vertical mast (15) and one of the mounting beams (43a) is made by a bent or cranked fastening element (44).

10. The rack storage system (1) according to claim 9, **characterized in that** the bent or cranked fastening element (44) and/or a distance plate (47) arranged between the vertical mast (15) and one of the mounting beams (43a) is manufactured from a material with an elastic modulus of less than 40,000 MPa.

11. The rack storage system (1) according to any of the claims 1 to 10, **characterized in that** the vertical mast (15) has a plurality of mast segments (49) which are jointed vertically on top of one another in an essentially gap-free manner.

12. The rack storage system (1) according to any of the claims 1 to 11, **characterized in that** the first lifting guide (16) for guiding the first lifting frame (20) is subdivided in a vertical direction by complementary-shape butt joints (50).

13. The rack storage system (1) according to the claims 11 and 12, **characterized in that** a division between the mast segments (49) is arranged offset in a vertical direction to the butt joints (50) of the lifting guide (16).

14. The rack storage system (1) according to any one of the claims 1 to 13, **characterized in that** the first lifting guide (16) comprises a first guide rail (48a) and a second guide rail (48b) for guiding the first lifting frame (20) which extend separately and in parallel in a longitudinal direction of the vertical mast (15) and are preferably releasably connected to the vertical mast (15) via connection means (46c).

15. The rack storage system (1) according to any one of the claims 1 to 14, **characterized in that** the vertical mast (15) and the first lifting guide (16), as well as the front uprights (6a) and rear uprights (7a) of the first storage rack (2a), are produced from the same material.

16. The rack storage system (1) according to claim 1 or 2, **characterized in that** the loading good manipulation unit (11) comprises an energy-absorbing deformation means (52) which is fixedly mounted below the first lifting frame (20).

17. The rack storage system (1) according to claim 16, **characterized in that** the energy-absorbing deformation means (52)

    - comprises a force distribution plate (54) having an impact area for the first lifting frame (20),
    - comprises a honeycomb element (55) below the force distribution plate (54) which is plastically deformable by application of force and which at least partially absorbs an impact energy generated in case of a collision of the first lifting frame (20) with the force distribution plate (54), and
    - comprises a mounting plate (56) below the honeycomb element (55) for mounting the deformation means (52).

18. The rack storage system (1) according to claim 16 or 17, **characterized in that** hollows of the honeycomb element (55) extend in a vertical direction.

19. The rack storage system (1) according to claim 1 or 2, **characterized in that** the first lifting drive (17) and the first vertical mast (15) are arranged on a common base plate (61).

20. The rack storage system (1) according to any of the claims 16 to 19, **characterized in that** the first lifting drive (17) and the energy-absorbing deformation means (52) are arranged on a common base plate (61).

21. The rack storage system (1) according to claim 1 or 2, **characterized in that** the drive station (18) of the first lifting drive (17) and the additional drive station (28) of the first additional lifting drive (27) are arranged on a common base plate (61).

22. The rack storage system (1) according to any one of the claims 1 to 21, **characterized in that**

    - an acceleration sensor (57) for detecting at least one acceleration in a vertical direction is arranged on the first lifting frame (20) and/or
    - the first loading good lifting device (13a) comprises an optical distance-measuring sensor (58) for detecting the vertical position of the first lifting frame (20) and/or means (59) for the optical data transmission to or from the first lifting frame (20).

23. The rack storage system (1) according to any one of the claims 1 to 22 **characterized in that**

    - the first traction means drive (19) of the first loading good lifting device (13a) comprises a traction means (33) and
    - the first loading good lifting device (13a) has a tensioning mechanism (34) for assembling the traction means (33) and/or for setting a pretension force in the traction means (33) which tensioning mechanism (34) is arranged on the side of the vertical mast (15) facing the rack aisle (5).

24. The rack storage system (1) according to any one of the claims 1 to 23, **characterized in that**

    - the loading good manipulation unit (11) has a second buffer device (12b) which is configured like the first buffer device (12a) and has a second loading good lifting device (13b) which is configured like the first loading good lifting device (13a), and
    - the rack storage system (1) has a second conveying system (25b) for transporting loading goods (4) to the second loading good lifting device (13b) and/or for transporting loading goods (4) from the second loading good lifting device (13b) which is adjoined to the loading good manipulation unit (11).

25. The rack storage system (1) according to any one of the claims 1 to 24, **characterized in that**

    - the traction means drive (19) comprises a drive wheel (35), a bottom deflection wheel (36), a top deflection wheel (37), a guide wheel (38) and a traction means (33) guided around the drive wheel (35), the bottom deflection wheel (36), the top deflection wheel (37) and the guide wheel (38), wherein
    - the bottom deflection wheel (36) is arranged in the region of a base of the vertical mast (15) and the top deflection wheel (37) is arranged in the region of a head of the vertical mast (15),

- the guide wheel (38) is arranged in the region of the base of the vertical mast (15) between the bottom deflection wheel (36) and the drive wheel (35),
- the drive wheel (35) is arranged at a distance to the vertical mast (15) in the region of the base of the vertical mast (15), and
- a center-to-center distance between the drive wheel (35) and the bottom deflection wheel (36) is at least 300 mm.

**Revendications**

1. Système de stockage à rayonnages (1) comprenant :

- un premier rayonnage de stockage (2a) avec des emplacements de stockage (3) pour des marchandises (4), qui sont juxtaposés dans des niveaux de stockage superposés (E1),
- un deuxième rayonnage de stockage (2b) avec des emplacements de stockage (3) pour des marchandises (4), qui sont juxtaposés dans des niveaux de stockage superposés (E1),
- dans lequel le premier rayonnage de stockage (2a) et le deuxième rayonnage de stockage (2b) se font face dans une direction horizontale z (z) à une distance (b) entre eux et une allée de rayonnages (5) est formée entre le premier rayonnage de stockage (2a) et le deuxième rayonnage de stockage (2b), qui présente un axe longitudinal s'étendant horizontalement dans une direction x (x), qui est orienté perpendiculairement à la direction z (z),
- dans lequel le premier rayonnage de stockage (2a) comprend des montants de rayonnage avant (6a), des montants de rayonnage arrière (7a), à chaque niveau de stockage (E1), des traverses longitudinales avant (8a) s'étendant dans la direction x (x) et reliées avec les montants de rayonnage avant (6a), à chaque niveau de stockage (E1), des traverses longitudinales arrière (9a) s'étendant dans la direction x (x) et reliées avec les montants de rayonnage arrière (7a) et, à chaque niveau de stockage (E1), un fond de rayonnage (10a) disposé entre la traverse longitudinale avant (8a) et la traverse longitudinale arrière (9a), avec les emplacements de stockage (3),
- dans lequel le deuxième rayonnage de stockage (2b) comprend des montants de rayonnage avant (6b), des montants de rayonnage arrière (7b), à chaque niveau de stockage (E1), des traverses longitudinales avant (8b) s'étendant dans la direction x (x) et reliées avec les montants de rayonnage avant (6b), à chaque niveau de stockage (E1), des traverses longitudinales arrière (9b) s'étendant dans la direction x (x) et reliées avec les montants de rayonnage arrière (7b) et, à chaque niveau de stockage (E1), un fond de rayonnage (10b) disposé entre la traverse longitudinale avant (8b) et la traverse longitudinale arrière (9b), avec les emplacements de stockage (3),
- une unité de manipulation de marchandises (11), qui comprend un premier dispositif de stockage temporaire (12a) décalé latéralement dans la direction z par rapport à l'allée de rayonnages (5) et un premier dispositif de levage de marchandises (13a) disposé dans la partie de bord de l'allée de rayonnages (5), pour le stockage et/ou le déstockage des marchandises (4),

- dans lequel le premier dispositif de stockage temporaire (12a) comprend, dans au moins certains des niveaux de stockage (E1), des dispositifs d'approvisionnement (14) qui sont conçus chacun pour le stockage temporaire d'une marchandise (4) ou de plusieurs marchandises (4) et qui sont disposés de manière adjacente, dans la direction x, à un des côtés du premier dispositif de levage de marchandises (13a) ou de manière adjacente, dans la direction x, aux deux côtés du premier dispositif de levage de marchandises (13a) et
- dans lequel le dispositif de levage de marchandises (13a), pour le stockage et/ou le déstockage de marchandises (4), comprend

- un premier mât vertical (15), disposé dans une partie de bord de l'allée de rayonnages (5), installé de manière fixe et fixé au premier rayonnage de stockage (2a), avec un guidage de levage (16),
- un premier entraînement de levage (17) avec une première station d'entraînement (18) et une transmission à moyen de traction (19), dans lequel la première station d'entraînement (18) est disposée sur un côté du mât vertical (15) orienté vers l'allée de rayonnages (5) et comprend un premier moteur d'entraînement (26a), qui est disposé à l'intérieur de l'allée de rayonnages (5),
- un premier châssis de levage (20) logé au niveau du premier guidage de levage (16) et pouvant être déplacé verticalement par le premier entraînement de levage (17), qui est relié avec la transmission à moyen de traction (19) du premier entraînement de levage (17) et
- un premier dispositif de transport (21) disposé sur le premier châssis de levage (20), qui est conçu au moins pour le transport des marchandises (4) entre un des dispositifs d'approvisionnement (14) et le premier dispositif de transport (21) dans la direction x (x), dans lequel le premier châssis de levage (20) avec le premier dispositif de transport (21) est disposé sur un côté du mât vertical (15) opposé à l'allée de rayonnages (5),

- des pistes de guidage (22a, 22b) qui sont disposées respectivement par paires, dans des niveaux de déplacement horizontaux superposés (E2), sur les traverses longitudinales avant (8a) du premier rayonnage de stockage (2a) et sur les traverses longitudinales avant (8b) du deuxième rayonnage de stockage (2b) et qui s'étendent dans la direction x le long du premier rayonnage de stockage (2a), du deuxième rayonnage de stockage (2b) et des dispositifs d'approvisionnement (14),
- au moins un appareil de commande de rayonnage automatisé (23) avec au moins un dispositif porte-charge (24) pour le transport des marchandises (4) entre les emplacements de stockage (3) et les dispositifs d'approvisionnement (14), qui est mobile sur un niveau de déplacement (E2) devant les emplacements de stockage (3) et devant le dispositif d'approvisionnement (14) le long des pistes de guidage (22a, 22b) dans la direction x et
- un premier dispositif de convoyage (25a) raccordé à l'unité de manipulation de marchandises (11), pour le transport des marchandises (4) vers le premier dispositif de levage de marchandises (13a) et/ou pour l'évacuation des marchandises (4) hors du premier dispositif de levage de marchandises (13a), dans lequel le premier dispositif de levage de marchandises (13a) relie par convoyage le premier dispositif de convoyage (25a) et les dispositifs d'approvisionnement (14),

**caractérisé en ce que**

le premier dispositif de levage de marchandises (13a) pour le stockage et/ou le déstockage des marchandises (4) comprend en outre

- un premier entraînement de levage supplémentaire (27) avec une première station d'entraînement supplémentaire (28) et une première transmission à moyen de traction supplémentaire (29) qui est couplée à celle-ci,
- un premier châssis de levage supplémentaire (30) logé de manière coulissante sur le premier mât vertical (15) le long du premier guidage de levage (16) ou le long d'un premier guidage de levage supplémentaire, qui peut être déplacé verticalement à l'aide du premier entraînement de levage supplémentaire (27) et
- un premier dispositif de transport supplémentaire (31) disposé sur le premier châssis de levage supplémentaire (30), qui est conçu au moins pour le transport des marchandises (4) entre un dispositif d'approvisionnement (14) et le premier dispositif de transport supplémentaire (31) dans la direction x (x).

2. Système de stockage à rayonnages (1) comprenant

- un premier rayonnage de stockage (2a) avec des emplacements de stockage (3) pour des marchandises (4), qui sont juxtaposés dans des niveaux de stockage superposés (E1),
- un deuxième rayonnage de stockage (2b) avec des emplacements de stockage (3) pour des marchandises (4), qui sont juxtaposés dans des niveaux de stockage superposés (E1),
- dans lequel le premier rayonnage de stockage (2a) et le deuxième rayonnage de stockage (2b) se font face dans une direction z horizontale (z) à une distance (b) entre eux et une allée de rayonnages (5) est formée entre le premier rayonnage de stockage (2a) et le deuxième rayonnage de stockage (2b), qui présente un axe longitudinal s'étendant horizontalement dans une direction x (x), qui est orienté perpendiculairement à la direction z (z),
- dans lequel le premier rayonnage de stockage (2a) comprend des montants de rayonnage avant (6a), des montants de rayonnage arrière (7a), à chaque niveau de stockage (E1), des traverses longitudinales avant (8a) s'étendant dans la direction x (x) et reliées avec les montants de rayonnage avant (6a), à chaque niveau de stockage (E1), des traverses longitudinales arrière (9a) s'étendant dans la direction x (x) et reliées avec les montants de rayonnage arrière (7a) et, à chaque niveau de stockage (E1), un fond de rayonnage (10a) disposé entre la traverse longitudinale avant (8a) et la traverse longitudinale arrière (9a), avec les emplacements de stockage (3),
- dans lequel le deuxième rayonnage de stockage (2b) comprend des montants de rayonnage avant (6b), des montants de rayonnage arrière (7b), à chaque niveau de stockage (E1), des traverses longitudinales avant (8b) s'étendant dans la direction x (x) et reliées avec les montants de rayonnage avant (6b), à chaque niveau de stockage (E1), des traverses longitudinales arrière (9b) s'étendant dans la direction x (x) et reliées avec les montants de rayonnage arrière (7b) et, à chaque niveau de stockage (E1), un fond de rayonnage (10b) disposé entre la traverse longitudinale avant (8b) et la traverse longitudinale arrière (9b), avec les emplacements de stockage (3),
- une unité de manipulation de marchandises (11), qui comprend un premier dispositif de stockage temporaire (12a) décalé latéralement dans la direction z par rapport à l'allée de rayonnages (5) et un premier dispositif de levage de marchandises (13a) disposé dans la partie de bord de l'allée de rayonnages (5), pour le stockage et/ou le déstockage des marchandises (4),

- dans lequel le premier dispositif de stockage temporaire (12a) comprend, dans au moins certains des niveaux de stockage (E1), des dispositifs d'approvisionnement (14) qui sont conçus chacun pour le stockage temporaire d'une marchandise (4) ou de plusieurs marchandises (4) et qui sont disposés de manière adjacente, dans la direction x, à un des côtés du premier dispositif de levage de marchandises (13a) ou de manière adjacente, dans la direction x, aux deux côtés du premier dispositif de levage de marchandises (13a) et
- dans lequel le dispositif de levage de marchandises (13a), pour le stockage et/ou le déstockage de marchandises (4), comprend

- un premier mât vertical (15), installé de manière fixe, avec un premier guidage de levage (16), qui présente une section transversale de profilé ouverte, dans lequel la section transversale de profilé comprend une base de profilé (40), d'où partent des branches de profilé (41), et des branches de montage (42) pliées aux extrémités des branches de profilé (41), au niveau desquelles le mât vertical (15) est fixé au premier rayonnage de stockage (2a),
- un premier entraînement de levage (17) avec une première station d'entraînement (18) et une transmission à moyen de traction (19),
- un premier châssis de levage (17) logé sur le premier guidage de levage (16) et pouvant être déplacé verticalement par le premier entraînement de levage (17), qui est relié avec la transmission à moyen de traction (19) du premier entraînement de levage (17) et
- un premier dispositif de transport (21) disposé sur le premier châssis de levage (20), qui est conçu au moins pour le transport des marchandises (4) entre un des dispositifs d'approvisionnement (14) et le premier dispositif de transport (21) dans la direction x (x),

- des pistes de guidage (22a, 22b) qui sont disposées respectivement par paires, dans des niveaux de déplacement horizontaux superposés (E2), sur les traverses longitudinales avant (8a) du premier rayonnage de stockage (2a) et sur les traverses longitudinales avant (8b) du deuxième rayonnage de stockage (2b) et qui s'étendent dans la direction x le long du premier rayonnage de stockage (2a), du deuxième rayonnage de stockage (2b) et des dispositifs d'approvisionnement (14),
- au moins un appareil de commande de rayonnage automatisé (23) avec au moins un dispositif porte-charge (24) pour le transport des marchandises (4) entre les emplacements de stockage (3) et les dispositifs d'approvisionnement (14), qui est mobile sur un niveau de déplacement (E2) devant les emplacements de stockage (3) et devant le dispositif d'approvisionnement (14) le long des pistes de guidage (22a, 22b) dans la direction x et
- un premier dispositif de convoyage (25a) raccordé à l'unité de manipulation de marchandises (11), pour le transport des marchandises (4) vers le premier dispositif de levage de marchandises (13a) et/ou pour l'évacuation des marchandises (4) hors du premier dispositif de levage de marchandises (13a), dans lequel le premier dispositif de levage de marchandises (13a) relie par convoyage le premier dispositif de convoyage (25a) et les dispositifs d'approvisionnement (14),

**caractérisé en ce que**

le premier dispositif de levage de marchandises (13a) pour le stockage et/ou le déstockage des marchandises (4) comprend en outre

- un premier entraînement de levage supplémentaire (27) avec une première station d'entraînement supplémentaire (28) et une première transmission à moyen de traction supplémentaire (29) qui est couplée à celle-ci,
- un premier châssis de levage supplémentaire (30) logé de manière coulissante sur le premier mât vertical (15) le long du premier guidage de levage (16) ou le long d'un premier guidage de levage supplémentaire, qui peut être déplacé verticalement à l'aide du premier entraînement de levage supplémentaire (27) et
- un premier dispositif de transport supplémentaire (31) disposé sur le premier châssis de levage supplémentaire (30), qui est conçu au moins pour le transport des marchandises (4) entre un dispositif d'approvisionnement (14) et le premier dispositif de transport supplémentaire (31) dans la direction x (x).

3. Système de stockage à rayonnages (1) selon la revendication 1 ou 2, **caractérisé en ce qu'**un axe d'entraînement (A) du premier moteur d'entraînement (26a) est orienté dans la direction x (x).

4. Système de stockage à rayonnages (1) selon la revendication 1 ou 2, **caractérisé en ce qu'**un axe d'entraînement (A) du premier moteur d'entraînement (26a) est orienté verticalement.

**5.** Système de stockage à rayonnages (1) selon la revendication 1, **caractérisé en ce que** le mât vertical (15) présente une section transversale de profilé ouverte, dans lequel la section transversale de profilé comprend une base de profilé (40), d'où partent des branches de profilé (41), et des branches de montage (42) pliées aux extrémités des branches de profilé (41), au niveau desquelles le mât vertical (15) est fixé au premier rayonnage de stockage (2a).

**6.** Système de stockage à rayonnages (1) selon la revendication 1 ou 2, **caractérisé en ce que**

- le premier rayonnage de stockage (2a) comprend des traverses de montage (43a) qui sont fixées, en plus des traverses longitudinales avant (8a), aux montants de rayonnages avant (6a) et s'étendent parallèlement aux traverses longitudinales avant (8a) et
- le mât vertical (15) comprend une portion de montage (45) orientée vers l'allée de rayonnages (5), avec laquelle le premier dispositif de levage de marchandises (13a) est logé sur les traverses de montage (43a).

**7.** Système de stockage à rayonnages (1) selon la revendication 6, **caractérisé en ce que**

- le deuxième rayonnage de stockage (2b) comprend des traverses de montage (43b) qui sont fixées, en plus des traverses longitudinales avant (8b), aux montants de rayonnages avant (6b) et s'étendent parallèlement aux traverses longitudinales avant (8b).

**8.** Système de stockage à rayonnages (1) selon la revendication 61, **caractérisé par** des passerelles (32) qui sont disposées dans des niveaux de maintenance superposés (E3) dans l'allée de rayonnages (5) et qui sont fixées aux traverses de montage (43a) du premier rayonnage de stockage (2a) et aux traverses de montage (43b) du deuxième rayonnage de stockage (2b).

**9.** Système de stockage à rayonnages (1) selon l'une des revendications 6 à 8, **caractérisé en ce que** la liaison entre le mât vertical (15) et une des traverses de montage (43a) est établie grâce à un élément de fixation plié ou coudé (44).

**10.** Système de stockage à rayonnages (1) selon la revendication 9, **caractérisé en ce que** l'élément de fixation plié ou coudé (44) et/ou une plaque de revêtement (47) disposée entre le mât vertical (15) et une des traverses de montage (43a) est constitué d'un matériau avec un module d'élasticité inférieur à 40 000 MPa.

**11.** Système de stockage à rayonnages (1) selon l'une des revendications 1 à 10, **caractérisé en ce que** le mât vertical (15) comprend une pluralité de segments de mât (49) qui sont assemblés verticalement les uns au-dessus des autres globalement sans interstices.

**12.** Système de stockage à rayonnages (1) selon l'une des revendications 1 à 11, **caractérisé en ce que** le premier guidage de levage (16) pour le guidage du premier châssis de levage (20) est divisé dans la direction verticale, par des jonctions bout-à-bout (50) par complémentarité de forme.

**13.** Système de stockage à rayonnages (1) selon les revendications 11 et 12, **caractérisé en ce qu'**une division entre les segments de mât (49) dans la direction verticale est décalée par rapport aux jonctions bout-à-bout (50) du guidage de levage (16).

**14.** Système de stockage à rayonnages (1) selon l'une des revendications 1 à 13, **caractérisé en ce que** le premier guidage de levage (16) pour le guidage du premier châssis de levage (20) comprend une première barre de guidage (48a) et une deuxième barre de guidage (48b), qui sont séparées l'une de l'autre et qui s'étendent parallèlement dans la direction longitudinale du mât vertical (15) et qui sont reliées, par l'intermédiaire de moyens de liaison (46c), de préférence de manière amovible, avec le mât vertical (15).

**15.** Système de stockage à rayonnages (1) selon l'une des revendications 1 à 14, **caractérisé en ce que** le mât vertical (15) et le premier guidage de levage (16) ainsi que les montants de rayonnage avant (6a) et les montants de rayonnage arrière (7a) du premier rayonnage de stockage (2a) sont constitués du même matériau.

**16.** Système de stockage à rayonnages (1) selon la revendication 1 ou 2, **caractérisé en ce que** l'unité de manipulation de marchandises (11) comprend un dispositif de déformation absorbant l'énergie (52), qui est monté de manière fixe en dessous du premier châssis de levage (20).

**17.** Système de stockage à rayonnages (1) selon la revendication 16, **caractérisé en ce que** le dispositif de déformation absorbant l'énergie (52)

- comprend une plaque de répartition des forces (54) avec une surface d'impact pour le premier châssis de levage (20),
- comprend, en dessous de la plaque de répartition des forces (54), un corps alvéolaire (55) déformable de manière plastique par l'application d'une force, qui absorbe au moins partiellement une énergie d'impact générée lors d'une collision du premier châssis de levage (20) avec la plaque de répartition des forces (54) et
- comprend, en dessous du corps alvéolaire (55), une plaque de montage (56) pour le montage du dispositif de déformation (52).

18. Système de stockage à rayonnages (1) selon la revendication 16 ou 17, **caractérisé en ce que** les cavités du corps alvéolaire (55) s'étendent dans la direction verticale.

19. Système de stockage à rayonnages (1) selon la revendication 1 ou 2, **caractérisé en ce que** le premier entraînement de levage (17) et le premier mât vertical (15) sont disposés sur une plaque de base (61) commune.

20. Système de stockage à rayonnages (1) selon l'une des revendications 16 à 19, **caractérisé en ce que** le premier entraînement de levage (17) et le dispositif de déformation absorbant l'énergie (52) sont disposés sur une plaque de base (61) commune.

21. Système de stockage à rayonnages (1) selon la revendication 1 ou 2, **caractérisé en ce que** la station d'entraînement (18) du premier entraînement de levage (17) et la station d'entraînement supplémentaire (28) du premier entraînement de levage supplémentaire (27) sont disposés sur une plaque de base (61) commune.

22. Système de stockage à rayonnages (1) selon l'une des revendications 1 à 21, **caractérisé en ce que**

- sur le premier châssis de levage (20), est disposé un capteur d'accélération (57) pour la détection d'au moins une accélération dans la direction verticale et/ou
- le premier dispositif de levage de marchandises (13a) comprend un capteur de mesure de distance optique (58) pour la détection de la position verticale du premier châssis de levage (20) et/ou des moyens (59) pour la transmission optique de données vers et à partir du premier châssis de levage (20).

23. Système de stockage à rayonnages (1) selon l'une des revendications 1 à 22, **caractérisé en ce que**

- la première transmission à moyen de traction (19) du premier dispositif de levage de marchandises (13a) comprend un moyen de traction (33) et
- le premier dispositif de levage de marchandises (13a) comprend un système de serrage (34) pour le montage du moyen de traction (33) et/ou pour l'ajustement d'une force de précontrainte dans le moyen de traction (33), qui est disposé sur le côté du mât vertical (15) orienté vers l'allée de rayonnages (5).

24. Système de stockage à rayonnages (1) selon l'une des revendications 1 à 23, **caractérisé en ce que**

- l'unité de manipulation de marchandises (11) comprend un deuxième dispositif de stockage temporaire (12b) qui est conçu comme le premier dispositif de stockage temporaire (12a), et comprend un deuxième dispositif de levage de marchandises (13b), qui est conçu comme le premier dispositif de levage de marchandises (13a) et
- le système de stockage à rayonnages (1) comprend un deuxième dispositif de convoyage (25b) raccordé à l'unité de manipulation de marchandises (11), pour le transport de marchandises (4) vers le deuxième dispositif de levage de marchandises (13b) et/ou pour l'évacuation des marchandises hors du deuxième dispositif de levage de marchandises (13b).

25. Système de stockage à rayonnages (1) selon l'une des revendications 1 à 24, **caractérisé en ce que**

- la transmission à moyen de traction (19) comprend une roue d'entraînement (35), une roue de renvoi inférieure (36), une roue de renvoi supérieure (37), une roue de guidage (38) et un moyen de traction (33) guidé autour de la roue d'entraînement (35), de la roue de renvoi inférieure (36), de la roue de renvoi supérieure (37) et de la roue de guidage (38), dans lequel
- la roue de renvoi inférieure (36) est disposée au niveau d'un pied de mât vertical du mât vertical (15) et la roue de renvoi supérieure (37) est disposée au niveau d'une tête de mât vertical du mât vertical (15),

- la roue de guidage (38) est disposée au niveau du pied du mât vertical entre la roue de renvoi inférieure (36) et la roue d'entraînement (35),
- la roue d'entraînement (35) est disposée, avec une distance par rapport au mât vertical (15), au niveau du pied du mât vertical et
- un entraxe (1) entre la roue d'entraînement (35) et la roue de renvoi inférieure (36) est d'au moins 300 mm.

# Fig.1

# Fig.2

# Fig.3

**Fig.4**

**Fig.5**

# Fig.6

# Fig.7

# Fig.8

44  45  15  47  46a  43a

# Fig.9

23  2a  22a  6a

E2  E1  10a  E3

8a  32  43a

# Fig.10

# Fig.11

# Fig.12

# Fig.13

# Fig.14

13a

37

LA

60

63

21

20

Y

Z

X

33

LE

34

52

54

55

56

38

26a

36

35

l

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2016060622 A
- JP 2009121583 A
- EP 2327643 B1
- EP 2436620 A2
- EP 2158144 B1
- EP 1716060 B1
- EP 2132113 B1
- DE 102011012424 A1
- WO 2013090970 A2
- WO 2016033628 A2
- WO 2016033628 A1